# EUROPÄISCHE PATENTSCHRIFT

(11) **EP 2 122 200 B1**
(45) Veröffentlichungstag und Bekanntmachung des Hinweises auf die Patenterteilung: **12.10.2011**
(21) Anmeldenummer: 08701546.7
(22) Anmeldetag: 17.01.2008
(51) Int. Cl.: F16H 37/04, B60K 17/08

(54) **GETRIEBE**
TRANSMISSION
ENGRENAGE

(30) Priorität: 17.01.2007 DE 102007003340
(43) Veröffentlichungstag der Anmeldung: 25.11.2009
(73) Patentinhaber: Deere & Company, Moline, IL 61265-8098 (US)
(72) Erfinder: OTTEN, Ulrich, 67396 67396 Speyer (DE); BUHRKE, Frank, 69488 Birkenau (DE); FISCHER, Hannes, 10997 Berlin (DE)
(74) Vertreter: Dehnhardt, Florian Christopher
(86) Internationale Anmeldenummer: PCT/EP2008/050485
(87) Internationale Veröffentlichungsnummer: WO 2008/087176

(56) Entgegenhaltungen:
- EP-A- 0 145 041
- EP-A- 0 262 625
- EP-A- 0 552 673
- EP-A- 1 375 967
- WO-A-91/00445
- DE-A1- 19 837 776
- GB-A- 1 596 830
- JP-A- 4 171 346
- JP-A- 2001 315 538
- US-A- 3 429 202
- US-A- 4 388 843

## Beschreibung

Die Erfindung betrifft ein Getriebe zum Übertragen eines von einem Antriebsmotor erzeugten Drehmoments auf mindestens eine Antriebsachse eines Fahrzeugs. Bei dem Fahrzeug handelt es sich insbesondere um ein landwirtschaftliches oder industrielles Nutzfahrzeug, vorzugsweise um einen Traktor. Das Getriebe umfasst mindestens eine für sich gesehen funktionsfähige Hauptgetriebeeinheit. Die Hauptgetriebeeinheit weist ein Ganggetriebe und/oder ein Gruppengetriebe auf. An die Hauptgetriebeeinheit ist ein in einem abgeschlossenen Optionsgetriebemodulgehäuse angeordnetes Optionsgetriebemodul in Form eines für sich gesehen eigenständig oder für sich gesehen funktionsfähig ausgeführten Getriebes adaptierbar. Mit dem Optionsgetriebemodul ist die Funktion des Getriebes erweiterbar. Die Hauptgetriebeeinheit und das Optionsgetriebemodul sind derart ausgebildet, dass der vorgesehene Bauraum im Wesentlichen auch dann unverändert ist, wenn das Optionsgetriebemodul (14) an der Hauptgetriebeinheit (12) adaptiert ist.

Unter einer für sich gesehen funktionsfähigen Getriebeeinheit im Sinn der vorliegenden Erfindung ist insbesondere zu verstehen, dass ein Drehmoment bzw. eine Drehzahl, welches bzw. welche der Getriebeeinheit über eine Eingangsschnittstelle zugeführt wird, auf einer Ausgangsschnittstelle der Getriebeeinheit wieder abgegeben wird. Hierbei kann die Getriebeeinheit mindestens eine Schaltstelle aufweisen, so dass die Getriebeeinheit Drehzahl, Drehmoment und/oder Drehrichtung in mindestens zwei Verhältniswerten bzw. Stufen wandeln kann.

Getriebe der eingangs genannten Art sind aus dem Stand der Technik bekannt. So kommt beispielsweise ein Getriebe der Anmelderin in der Serienproduktion von Traktoren der 6000er Serie zum Einsatz, bei welchem an einer Hauptgetriebeeinheit ein Optionsgetriebemodul adaptiert wird. Dieses Optionsgetriebemodul ist modular aufgebaut und kann in Abhängigkeit eines Kundenwunsches vielseitig zusammengestellt werden. Das Optionsgetriebemodul ist zwischen Antriebsmotor und Hauptgetriebeeinheit angeordnet und nimmt in Abhängigkeit der jeweiligen Zusammenstellung des Optionsgetriebemoduls unterschiedlich viel Bauraum in Anspruch. In einer vollen Ausbaustufe des Getriebes ist nahezu der gesamte Bauraum zwischen Antriebsmotor und Hauptgetriebeeinheit mit dem Optionsgetriebemodul verbaut. Falls das Optionsgetriebemodul lediglich eine einzelne Funktion aufweist, ist der Bauraum zwischen Antriebsmotor und Hauptgetriebeeinheit weitgehend ungenutzt, da für sämtliche Traktoren dieser Serie die gleiche Rahmenkonstruktion zum Einsatz kommt, und sowohl Antriebsmotor als auch Hauptgetriebeeinheit stets im Wesentlichen an der gleichen Stelle relativ zur Rahmenkonstruktion angeordnet sind. Der Einsatz einer Rahmenkonstruktion ermöglicht somit unter anderem, dass ein Traktor einer bestimmten Serie bzw. Leistungsklasse variabel an die jeweilige Kundenanforderung angepasst werden kann, wodurch für Traktoren dieser Serie eine große Getriebevielfalt auch unter wirtschaftlichen Gesichtspunkten darstellbar ist.

Aus der EP 552 673 A1 geht ferner ein Getriebe für ein landwirtschaftliches Fahrzeug hervor. Das Getriebe weist mehrere modular zusammensetzbare Getriebeeinheiten auf. Gemäß einer in der EP 552 673 A1 dargestellten Ausführungsform umfasst das Getriebe ein Gangschaltgetriebemodul, ein Gruppenschaltgetriebemodul, sowie ein zwischen dem Gangschaltgetriebemodul und dem Gruppenschaltgetriebemodul angeordnetes Zwischenschaltgetriebemodul. Für letzteres stehen zwei unterschiedliche Getriebeoptionen zur Auswahl, von denen eine erste Option ein Kriechganggetriebe und eine zweite Option zusätzliche Bereichszahnräder enthält. Unabhängig von der gewählten Option weist das Getriebe jeweils die gleichen Außenabmessungen auf.

Es ist Aufgabe der Erfindung, die Modularität eines Getriebes der eingangs genannten Art weiter zu verbessern.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Getriebe der eingangs genannten Art dadurch gekennzeichnet, dass die Hauptgetriebeeinheit und das Optionsgetriebemodul derart ausgebildet sind, dass das Optionsgetriebemodul in Form eines für sich gesehen eigenständigen oder für sich gesehen funktionsfähigen Getriebes ausgeführt ist, welches eine eigene Ölpumpe und mindestens eine eigene Betätigungseinrichtung zur Betätigung von Kupplungen des Optionsgetriebemoduls mittels hydraulischer Schaltelemente aufweist, und dass das Optionsgetriebemodul ein abgeschlossenes Optionsgetriebemodulgehäuse aufweist

Zunächst sei bemerkt, dass unter dem Begriff Bauraum im Sinn der vorliegenden Erfindung insbesondere der Raum bzw. das Volumen zu verstehen ist, welcher bzw. welches von der Hauptgetriebeeinheit bzw. von dem Gehäuse der Hauptgetriebeeinheit eingenommen wird.

In erfindungsgemäßer Weise ist die Hauptgetriebeeinheit derart ausgebildet, dass an diese das Optionsgetriebemodul adaptierbar ist, wobei unabhängig von der Ausgestaltung oder Ausbaustufe des Optionsgetriebemoduls ein vorgebbarer maximaler Bauraum des aus Optionsgetriebemodul und Hauptgetriebeeinheit gebildeten Getriebes nicht überschritten wird. Dies kann beispielsweise dadurch erzielt werden, dass das Optionsgetriebemodul stets an bzw. in demselben vorgegebenen Teilbereich des Getriebes räumlich angeordnet ist. Demgemäß ist das Getriebe bzw. die Hauptgetriebeeinheit derart ausgebildet, dass von dieser stets der Bauraum für das Optionsgetriebemodul zur Verfügung gestellt wird. Die Getriebekomponenten der Hauptgetriebeeinheit können derart ausgebildet bzw. angeordnet sein, dass ein Drehmomentfluss beispielsweise von der Hauptgetriebeeinheit zum Optionsgetriebemodul und wieder zurück in die Hauptgetriebeeinheit verlaufen kann. Hierbei können fest vorgegebene Schnittstellen definiert sein, über welche die Hauptgetriebeeinheit und das Optionsgetriebemodul miteinander angekoppelt sind und über welche ein Drehmoment übergeben werden kann. Insbesondere können die Bauteile oder die Baugruppen des Getriebes derart ausgebildet sein, dass der resultierende Drehmomentfluss in sich gefaltet ist, also im Getriebe in einer Richtung und mindestens ein weiteres Mal in die entgegengesetzte Richtung verläuft. Im Gegensatz hierzu verläuft der Drehmomentfluss bei den aus dem Stand der Technik bekannten Getrieben im Wesentlichen in einer Richtung, da für jede weitere Option ein weiteres Optionsmodul an das Getriebe entlang dieser Richtung angebaut ist.

Insoweit ist das erfindungsgemäße Getriebe durch ein modulares Konzept gekennzeichnet und bei einer Verwendung des erfindungsgemäßen Getriebes ist es in vorteilhafter Weise möglich, für sämtliche Getriebevarianten einer Fahrzeugserie stets denselben Bauraum vorzusehen, wodurch der restliche Bauraum der Fahrzeuge der Serie effektiver genutzt werden kann, beispielsweise durch das Anordnen eines Kraftstofftanks zwischen dem Antriebsmotor und dem erfindungsgemäßen Getriebe. Somit kann bezüglich dieses Beispiels für sämtliche Fahrzeuge der Serie stets der gleiche Kraftstofftank verwendet werden, was eine kostengünstigere Herstellung des gesamten Fahrzeugs ermöglicht, da zumindest die um das erfindungsgemäße Getriebe angeordneten Baugruppen oder Komponenten des Fahrzeugs stets gleich ausgebildet sind und daher in größeren Stückzahlen kostengünstiger bezogen werden können.

In einer bevorzugten Ausführungsform weist das Optionsgetriebemodul mindestens eine Optionseinheit auf. Eine Optionseinheit kann beispielsweise in Form zumindest einer Kupplungseinheit ausgebildet sein. Diese Kupplungseinheit kann eine reibschlüssige (asynchrone) Kupplung umfassen, mit welcher der Drehmomentfluss zwischen Antriebsmotor und dem Getriebe, genauer gesagt dem Optionsgetriebemodul, unterbrochen werden kann.

Weiterhin kann das Optionsgetriebemodul eine Optionseinheit aufweisen, welche in Form einer Reversiereinheit ausgebildet ist. Mit dieser kann eine Drehrichtungsumkehr erzielt werden, was insbesondere für landwirtschaftliche und industrielle Nutzfahrzeuge bzw. Traktoren vorgesehen ist, da solche Fahrzeuge während des Betriebs häufig die Fahrtrichtung wechseln.

Insbesondere Traktoren weisen üblicherweise eine Kriechgang-Einheit auf, mit welcher der Traktor eine hohe Drehmomentleistung bei einer geringen Fortbewegungsgeschwindigkeit auf den Untergrund umsetzen kann, beispielsweise beim Pflanzen. Auch eine solche Kriechgang-Einheit kann in Form einer Optionseinheit ausgebildet sein, welche in das Optionsgetriebemodul integrierbar ist.

Weiterhin ist es denkbar, als Optionseinheit eine Zwei-Stufen-Getriebeeinheit (High-Low) vorzusehen. Eine solche Optionseinheit ermöglicht insbesondere ein unmittelbares Umschalten von einer hohen Drehzahl, wie sie beispielsweise bei einem Traktor bei einer schnellen Fahrt auf einer Straße benötigt wird, auf eine niedrige Drehzahl, wie sie beispielsweise bei Feldarbeiten eines Traktors benötigt wird. Die Zwei-Stufen-Getriebeeinheit kann derart ausgebildet sein, dass diese formschlüssig oder kraftschlüssig, insbesondere unter Last, schaltbar ist.

In einer weiteren bevorzugten Ausführungsform weist das Optionsgetriebemodul ein Basis-Gehäuseteil auf. Ein solches Basis-Gehäuseteil kann derart ausgebildet sein, dass daran mindestens eine Optionseinheit adaptiert werden kann. Vorzugsweise wird die Kupplungseinheit an das Basis-Gehäuseteil des Optionsgetriebemoduls adaptiert, da mit der Kupplungseinheit die Einleitung des vom Antriebsmotor abgegebenen Drehmoments in das Getriebe erfolgt, was bei einer bevorzugten Ausführungsform des erfindungsgemäßen Getriebes für alle unterschiedlich konfigurierbaren Hauptgetriebeeinheiten samt Optionsgetriebemodulen vorgesehen ist.

Zur einfachen und zeitsparenden Montage des Optionsgetriebemoduls an die Hauptgetriebeeinheit kann das Basis-Gehäuseteil des Optionsgetriebemoduls mindestens ein Positioniermittel aufweisen. An der Hauptgetriebeeinheit und/oder an einem Getriebegehäuse kann ein zu diesem Positioniermittel im Wesentlichen komplementär ausgebildetes weiteres Positioniermittel vorgesehen sein. Das Positioniermittel und das weitere Positioniermittel sind derart angeordnet, dass das Optionsgetriebemodul bezüglich seiner räumlichen Position und/oder Orientierung relativ zur Hauptgetriebeeinheit positionierbar bzw. ausrichtbar ist, wenn die Positioniermittel aneinander zur Anlage kommen. So kann beispielsweise als Positioniermittel mindestens eine Referenzfläche am Gehäuse der Hauptgetriebeeinheit vorgesehen sein, beispielsweise an einer Gehäuseöffnung, bezüglich welcher einerseits Lagerstellen oder Führungsbohrungen der Hauptgetriebeeinheit während der Herstellung des Getriebes ausgerichtet bzw. relativpositioniert werden und bezüglich welcher andererseits die Positionierung bei der Adaption des Optionsgetriebemoduls erfolgen kann. Dementsprechend kann das Positioniermittel mindestens einen Stift, mindestens eine Anschlagfläche und/oder mindestens eine Kante aufweisen. Mit dieser Maßnahme kann in vorteilhafter Weise eine langwierige Justage der Komponenten vermieden werden.

Eine Optionseinheit des Optionsgetriebemoduls kann ein Gehäuseteil aufweisen. Mit dem Gehäuseteil kann mindestens eine Welle drehbar gelagert werden. Das Gehäuseteil kann auch eine Lagerstütze aufweisen, welche an mindestens einer Gehäusewand des Optionsgetriebemoduls oder an mindestens einer Gehäusewand der Hauptgetriebeeinheit zur Anlage kommen kann. Das Gehäuseteil kann einen Getriebeölanschluss zu einer Gehäusewand und/oder zu einem Getriebedeckel der Hauptgetriebeeinheit bilden. Über einen solchen Getriebeölanschluss kann eine Schmierung der entsprechenden Optionseinheit erfolgen und/oder der Getriebeölanschluss kann zur hydraulischen Betätigung eventuell vorgesehener Schaltkomponenten der Optionseinheit dienen. Ebenfalls kann das Gehäuseteil einen Kanal aufweisen, mit welchem Getriebeöl oder Hydraulikflüssigkeit zu einem hydraulisch betätigbaren Schaltelement geleitet werden kann.

Bevorzugt ist das Optionsgetriebemodul derart ausgebildet, dass unterschiedliche Optionen des Optionsgetriebemoduls durch eine modulare, kumulierte Adaption mehrerer Optionseinheiten nebst Gehäuseteilen bzw. Lagerstützen darstellbar ist. Dies kann dadurch erreicht werden, dass die Gehäuseteile der jeweiligen Optionseinheiten aneinander montiert werden, wodurch insbesondere die Funktion des Optionsgetriebemoduls erweiterbar ist. Auch das Optionsgetriebemodul nebst der das Optionsmodul bildenden Optionseinheiten ist demgemäß derart ausgebildet, dass sämtliche sinnvoll darstellbaren Optionen des Optionsgetriebemoduls allesamt einen maximal vorgebbaren Bauraum nicht überschreiten, so dass die Optionen an die Hauptgetriebeeinheit adaptiert werden können. Genauer gesagt wird an das Basis-Gehäuseteil eine erste Optionseinheit des Optionsgetriebemoduls adaptiert. Weiterhin wird an das Basis-Gehäuseteil ein weiteres Gehäuseteil einer weiteren Optionseinheit adaptiert, und so weiter.

Bevorzugt sind die jeweiligen Wellen der einzelnen Optionseinheiten im montierten Zustand im Wesentlichen koaxial zueinander angeordnet. So können beispielsweise eine Hohlwelle und eine darin angeordnete innere Welle oder zwei in Richtung der Rotationsachse hintereinander angeordnete Wellen vorgesehen sein. Parallel zueinander angeordnete Wellen der einzelnen Optionseinheiten sind besonders bevorzugt.

In einer weiteren bevorzugten Ausführungsform ist ein Getriebegehäuse vorgesehen, welches die Hauptgetriebeeinheit aufnimmt. Das Getriebegehäuse kann derart ausgebildet sein, dass das Optionsgetriebemodul zumindest weitgehend in dem Getriebegehäuse montierbar ist. Das Getriebegehäuse kann hierzu zweckmäßigerweise eine Öffnung aufweisen, in welche das Optionsgetriebemodul eingebracht werden kann. Diese Öffnung kann mit einem Deckel oder mit einer Gehäuseabdeckung abgeschlossen bzw. abgedichtet werden, welcher bzw. welche am Optionsgetriebemodul zum Abdichten des Getriebes vorgesehen sein kann. Unabhängig davon, ob ein Optionsgetriebemodul an der Hauptgetriebeeinheit adaptiert ist oder nicht und/oder unabhängig davon, welche Ausbaustufe das Optionsgetriebemodul aufweist, weist das Getriebegehäuse samt Deckel bzw. samt adaptiertem Optionsgetriebemodul nebst Gehäuseabdeckung hierfür stets im Wesentlichen den gleichen Bauraum auf.

Das Getriebegehäuse kann ein- oder mehrteilig ausgebildet sein. Unter einem einteilig ausgebildeten Getriebegehäuse ist insbesondere zu verstehen, dass der die Hauptgetriebeeinheit und das Optionsgetriebemodul umgebende Gehäuseabschnitt aus einem Teil gefertigt ist, beispielsweise aus einem Guss hergestellt wird. Das Getriebegehäuse weist in diesem Fall eine Öffnung auf, welche mit einem Deckel verschließbar ist. Hierbei soll - obwohl das Getriebegehäuse insgesamt dann durch den die Hauptgetriebeeinheit und das Optionsgetriebemodul umgebenden Gehäuseabschnitt und den Deckel gebildet ist - dennoch als ein einteilig ausgebildetes Getriebegehäuse aufgefasst werden. Der Deckel schließt das Getriebegehäuse nach außen ab, ohne jedoch Bauteile des Getriebes in sich aufzunehmen. Das Getriebegehäuse nimmt Bauteile des Getriebes in sich auf. Durch die Öffnung des Getriebegehäuses können die Komponenten der Hauptgetriebeeinheit und des Optionsgetriebemoduls montiert und/oder gewartet bzw. repariert werden. Alternativ zu einem einteilig ausgebildeten Getriebegehäuse kann dieses auch zwei- oder mehrteilig ausgebildet sein. So kann das Getriebegehäuse beispielsweise aus zwei im Wesentlichen gleich großen Teilen zusammengesetzt sein, wobei das so zusammengesetzte Getriebegehäuse sowohl die Hauptgetriebeeinheit als auch das Optionsgetriebemodul aufnimmt bzw. zumindest größtenteils umgibt und gegebenenfalls durch einen Deckel abgeschlossen werden kann. Das Getriebegehäuse kann auch aus zwei Teilen zusammengesetzt sein, wobei das eine Gehäuseteil die Hauptgetriebeeinheit und das andere Gehäuseteil das Optionsgetriebemodul aufnimmt bzw. zumindest größtenteils umgibt. Hierdurch wird eine einfache Herstellung bzw. Montage des Getriebes ermöglicht. Wenn die beiden Gehäuseteile aneinander montiert werden, ist das Getriebe zumindest größtenteils montiert und grundsätzlich funktionsbereit. Auch das aus den beiden Gehäuseteilen zusammengesetzte Getriebegehäuse kann durch einen Deckel abgeschlossen sein.

Gegebenenfalls kann das an der Hauptgetriebeeinheit bzw. in dem Getriebegehäuse adaptierte Optionsgetriebemodul teilweise aus dem Getriebegehäuse vorstehen. Mit einem einteilig ausgebildeten Getriebegehäuse kann beispielsweise das Hauptgetriebe in das Getriebegehäuse fertig montiert werden und gegebenenfalls auf Funktion überprüft werden. Die Adaption des Optionsgetriebemoduls kann nachträglich erfolgen, ohne dass die Hauptgetriebeeinheit erneut auf Funktion zu überprüfen ist. Zur Adaption des Optionsgetriebemoduls muss die Hauptgetriebeeinheit oder das Gehäuse nicht zerlegt werden, es ist lediglich der - vorzugsweise an einem oberen Bereich angeordnete - Deckel zu entfernen und das Optionsgetriebemodul einzubringen. So geht in vorteilhafter Weise kein Getriebeöl unnötig verloren, welches sich aufgrund der vorherigen Funktionsprüfung gegebenenfalls noch im Getriebegehäuse befindet. Zwischen dem Optionsgetriebemodul und der Hauptgetriebeeinheit kann beispielsweise über eine Welle-Nabe-Verbindung oder über die Kupplungseinheit des Optionsgetriebemoduls ein Drehmomentfluss mittelbar oder unmittelbar herstellbar sein. Eine Funktionsprüfung des erfindungsgemäßen Getriebes kann sich hieran anschließen.

In oder an das Getriebegehäuse ist bevorzugt ein Pumpenantrieb für Getriebeöl, ein Hinterachsdifferentialgetriebe, eine Schnittstelle für einen mechanischen Einzelradantrieb und/oder ein Zwischenachsdifferentialgetriebe adaptierbar. Dementsprechend weist das Getriebegehäuse entsprechende Befestigungsstellen, Flansche oder ähnliches auf. Das Hinterachsdifferentialgetriebe ist bevorzugt in einem an dem Fahrzeug angebauten Zustand des Getriebes seitlich angeordnet und kann sich zumindest teilweise in das Getriebegehäuse erstrecken, wobei eine Ausgangswelle der Hauptgetriebeeinheit unmittelbar mechanische Leistung auf das Hinterachsdifferentialgetriebe übertragen kann.

Damit zwischen der Hauptgetriebeeinheit und dem Optionsgetriebemodul ein Drehmomentfluss möglich ist, ist bevorzugt das Optionsgetriebemodul mit einer Welle-Nabe-Verbindung an die Hauptgetriebeeinheit adaptierbar. Diese Welle-Nabe-Verbindung ist vorzugsweise reversibel ausgebildet, kann also nachträglich wieder gelöst werden, um beispielsweise das Optionsgetriebemodul zu Servicezwecken von der Hauptgetriebeeinheit zu demontieren oder um nachträglich ein anderes Optionsgetriebemodul an die Hauptgetriebeeinheit zu adaptieren. Genauer gesagt kann die Welle-Nabe-Verbindung formschlüssig oder reibschlüssig drehmomentfest ausgebildet sein.

Wie bereits in Zusammenhang mit der Welle-Nabe-Verbindung angedeutet, kann das Optionsgetriebemodul reversibel in oder an der Hauptgetriebeeinheit adaptierbar sein, um beispielsweise das Optionsgetriebemodul nachträglich von der Hauptgetriebeeinheit demontieren zu können.

Grundsätzlich kann die Hauptgetriebeeinheit in Form eines stufenlosen oder eines diskrete Schaltstufen aufweisenden Getriebes ausgebildet sein. Bevorzugt ist die Hauptgetriebeeinheit ein Getriebe mit diskreten Schaltstufen. Auch hierfür können verschieden ausgebildete Hauptgetriebeeinheiten vorgesehen sein. So ist es beispielsweise denkbar, dass eine Hauptgetriebeeinheit 9 Vorwärts- und 3 Rückwärtsgänge (als 3 Gänge mal 3 Gruppen), 8 Vorwärts- und 4 Rückwärtsgänge (als 4 Gänge mal 2 Gruppen), 12 Vorwärts- und 4 Rückwärtsgänge als (als 3 Gänge mal 4 Gruppen), 12 Vorwärts- und 4 Rückwärtsgänge (als 4 Gänge mal 3 Gruppen) oder 16 Vorwärtsgänge (als 4 Gänge mal 4 Gruppen) aufweist.

Genauer gesagt ist die Hauptgetriebeeinheit als Drei-Wellen-Getriebe ausgeführt. Die drei Getriebewellen sind im Wesentlichen parallel zueinander in der Hauptgetriebeeinheit angeordnet. Die Hauptgetriebeeinheit kann eine Eingangswelle, eine Zwischenwelle und eine Ausgangswelle aufweisen. Bevorzugt ist die Eingangswelle in Form einer Hohlwelle ausgebildet. Hierbei kann das Getriebe derart konfiguriert sein, dass ein Drehmomentfluss von der Eingangswelle über die Zwischenwelle auf die Ausgangswelle (zwei Zahnradgriffe) oder unmittelbar von der Eingangswelle auf die Ausgangswelle (ein Zahnradgriff) erfolgt.

Zumeist wird die Kraftübertragung innerhalb des Getriebes über Zahnradpaare geleitet, welche jeweils auf zwei Getriebewellen angeordnet sind und welche einen fest vorgegebenen Achsabstand zueinander aufweisen. Damit ein Getriebe für eine bestimmte Leistungsklasse möglichst schmal baut, werden die Achsen der Eingangs- und Ausgangswellen, insbesondere bei Traktoren, bislang vertikal zueinander angeordnet. Dies unter anderem deshalb, weil bei Traktoren aufgrund verschiedener Normen die Position des Zapfwellenstummels vorgegeben ist und hierdurch eine günstige Ausführung des Zapfwellenantriebsstrangs möglich ist. Bei dieser Konfiguration wird mit nur einem Zahnradgriff die Übersetzung von dem Antriebsmotor zum Zapfwellenstummel geführt.

In einer bevorzugten Ausführungsform des erfindungsgemäßen Getriebes ist die Hauptgetriebeeinheit derart ausgestaltet, dass in einem Zustand, in welchem die Hauptgetriebeeinheit in einem Fahrzeug eingebaut ist, die Position der Ausgangswelle in horizontaler Richtung und gegebenenfalls in vertikaler Richtung zur Position der Eingangswelle versetzt angeordnet ist. Hierdurch baut die Hauptgetriebeeinheit unter Umständen nicht mehr ebenso schmal, wie dies bei den oben erwähnten und aus dem Stand der Technik bekannten Zwei-Wellen-Getrieben der Fall ist . Allerdings kann hierdurch das Getriebe flacher im Fahrzeug eingebaut werden, so dass beispielsweise auch der Antriebsmotor des Fahrzeugs bzw. dessen Abtriebswelle relativ zum Fahrwerk tiefer angeordnet werden kann. Hierdurch kann die Motorhaube des Fahrzeugs ebenfalls tiefer angeordnet werden, was eine Verbesserung der Sichtverhältnisse ermöglicht. Hierdurch kann des Weiteren der so genannte Getriebetunnel entfallen, welcher bislang in Kabinen oder an Bedienerplattformen von Traktoren vorgesehen ist und welcher die Bewegungsfreiheit im Beinbereich der Bediener erheblich einschränkt.

Zusätzlich oder alternativ ist die Hauptgetriebeeinheit derart ausgebildet, dass in einem Zustand, in welchem die Hauptgetriebeeinheit in einem Fahrzeug eingebaut ist, die Position der Zwischenwelle in vertikaler Richtung zur Position der Ausgangswelle und/oder zur Position der Eingangswelle versetzt angeordnet ist. Es ist auch denkbar, dass die Hauptgetriebeeinheit derart ausgebildet ist, dass in einem Zustand, in welchem die Hauptgetriebeeinheit in einem Fahrzeug eingebaut ist, die Position der Zwischenwelle in horizontaler Richtung zur Position der Eingangswelle und/oder zur Position der Ausgangswelle versetzt angeordnet ist. Mit anderen Worten sind die drei Wellen der Hauptgetriebeeinheit in einer Dreieckskonfiguration angeordnet, wobei die Eingangswelle in vertikaler Richtung oberhalb der Ausgangswelle, jedoch mit einem geringeren Höhenunterschied zur Ausgangswelle angeordnet sein kann , als bislang üblich.

Die Eingangswelle wie auch die Ausgangswelle ist jeweils mit Zahnrädern und weiteren Getriebeelementen bestückt. Damit während des Betriebs unterschiedliche Übersetzungsverhältnisse der Hauptgetriebeeinheit eingestellt werden können, weist die Eingangswelle und/oder die Ausgangswelle jeweils mindestens eine Schalteinrichtung auf. Hierbei kann es sich beispielsweise um ein Schaltelement zum Betätigen einer hydraulischen Kupplung handeln. In diesem Fall können die Schaltelemente beispielsweise eine Hydraulikleitung, eine Schaltgabel, mindestens eine Führungsstange und eine Schaltmuffe aufweisen. Mit unter Druck stehender Flüssigkeit kann die auf der mindestens einen Führungsstange geführte Schaltgabel derart bewegt werden, dass eine Schaltmuffe zum Herstellen, Umschalten und/oder Lösen einer drehfesten Verbindung zwischen einem auf der jeweiligen Welle angeordneten Zahnrad und der Welle betätigt wird. Die Flüssigkeit kann mit der Hydraulikleitung zu der Schaltgabel bzw. zu einem entsprechenden Betätigungselement, beispielsweise einem Kolben, geleitet werden. Eine derartige Schalteinrichtung stellt üblicherweise eine formschlüssige, synchronisierte Schaltstelle dar. Es ist jedoch auch denkbar, dass die Schalteinrichtung reibschlüssig, also unsynchronisiert schaltbar ist.

Die Hauptgetriebeeinheit ist derart ausgebildet, dass in Abhängigkeit der Schaltzustände der Schalteinrichtungen ein Drehmomentfluss von der Eingangswelle über die Zwischenwelle zur Ausgangswelle oder von der Eingangswelle unmittelbar zur Ausgangswelle herstellbar ist. Dementsprechend kann ein Drehmoment mit der Hauptgetriebeeinheit mit Hilfe von zwei oder drei Zahnradketten bzw. Zahnradgriffen übertragen werden.

In einer bevorzugten Ausführungsform der Hauptgetriebeeinheit sind bei unterschiedlicher Bestückung der einzelnen Getriebewellen der Hauptgetriebeeinheit für Getriebe unterschiedlicher Eigenschaften die entsprechenden Schalteinrichtungen jeweils an der gleichen Stelle bzw. Position angeordnet. Ferner kann mindestens eine Lagerstelle einer Getriebewelle auch bei unterschiedlicher Bestückung einer Hauptgetriebeeinheit für Getriebe unterschiedlicher Eigenschaften jeweils an der gleichen Stelle bzw. Position angeordnet sein. Falls also die Hauptgetriebeeinheit 9 Vorwärts- und 3 Rückwärtsgänge aufweist, sind die hierfür erforderlichen Schaltstellen sowie die Lagerstellen für die drei Wellen der Hauptgetriebeeinheit an einer bestimmten Stelle in der Hauptgetriebeeinheit vorgesehen. Falls nun eine Hauptgetriebeeinheit 16 Vorwärts- und 4 Rückwärtsgänge aufweist, sind die hierfür erforderlichen Schaltstellen sowie die Lagerstellen der drei Wellen der Hauptgetriebeeinheit im Wesentlichen an derselben Stelle angeordnet, wie dies bei der Getriebeeinheit mit 9 Vorwärts- und 3 Rückwärtsgängen der Fall ist. Hierdurch kann in vorteilhafter Weise eine Vielzahl von unterschiedlich konfigurierbaren Hauptgetriebeeinheiten unter Verwendung ansonsten im Wesentlichen unveränderter Komponenten, beispielsweise des Gehäuses der Hauptgetriebeeinheit oder der Schaltstellen selbst, dargestellt werden.

Insbesondere für Getriebe, welche in landwirtschaftlichen Fahrzeugen eingesetzt werden, ist es zweckmäßig, die Zahnräder und mindestens eine Schalteinrichtung für das Ganggetriebe auf der Eingangswelle der Hauptgetriebeeinheit anzuordnen. Dementsprechend sind Zahnräder und mindestens eine Schalteinrichtung für ein Gruppengetriebe auf der Ausgangswelle der Getriebeeinheit angeordnet.

In einer weiteren bevorzugten Ausführungsform des erfindungsgemäßen Getriebes ist die Hauptgetriebeeinheit derart ausgebildet, dass alle Achsabstände zwischen den drei Getriebewellen jeweils im Wesentlichen den gleichen Wert aufweisen. Bevorzugt ist jedoch vorgesehen, dass bei der Hauptgetriebeeinheit eines erfindungsgemäßen Getriebes mindestens zwei, vorzugsweise alle drei Achsabstände zwischen den drei Getriebewellen jeweils unterschiedliche Werte aufweisen. Hierdurch können einerseits günstige Übersetzungsverhältnisse und andererseits hohe Wirkungsgrade der Hauptgetriebeeinheit erzielt werden.

In einer bevorzugten Ausführungsform weist das Gehäuse der Hauptgetriebeeinheit bzw. die Hauptgetriebeeinheit eine zur Montage des Optionsgetriebemoduls dienende Gehäuseöffnung auf. Zur Montage wird das Optionsgetriebemodul in die Gehäuseöffnung eingebracht. Die Gehäuseöffnung ist im Zusammenwirken mit dem Optionsgetriebemodul vorzugsweise derart ausgebildet, dass das Optionsgetriebemodul nach einem in der Gehäuseöffnung eingebrachten Zustand in mindestens einer Richtung relativ zur Hauptgetriebeeinheit zum Herstellen einer Welle-Nabe-Verbindung zwischen der Hauptgetriebeeinheit und dem Optionsgetriebemodul verschiebbar ist. Hierdurch kann eine schnelle und unkomplizierte Montage des Optionsgetriebemoduls an der Hauptgetriebeeinheit erfolgen. In gleicher Weise kann eine Demontage des Optionsgetriebemoduls beispielsweise zu Wartungszwecken oder zu einer nachträglichen Veränderung der Getriebeeigenschaften erfolgen.

Im Folgenden wird auf eine Ausgestaltung des erfindungsgemäßen Getriebes bzw. eine Anordnung des erfindungsgemäßen Getriebes in einem Fahrzeug eingegangen, welche insbesondere für Traktoren geeignet ist. Demgemäß ist die Hauptgetriebeeinheit in räumlicher Umgebung bzw. Nähe einer Antriebsachse des Fahrzeugs angeordnet, welche bei Traktoren üblicherweise die Hinterachse ist. Unter dem Begriff räumlicher Nähe kann beispielsweise der halbe Radabstand zu verstehen sein. Mit dem von der Hauptgetriebeeinheit nebst gegebenenfalls adaptiertem Optionsgetriebemodul abtriebsseitig abgegebenen Drehmoment ist zumindest teilweise die Antriebsachse antreibbar.

Bevorzugt ist bezüglich einer Längsachse der Antriebsachse des Fahrzeugs die Hauptgetriebeeinheit und/oder das Optionsgetriebemodul dem Achsdifferentialgetriebe räumlich nachgeordnet. Mit anderen Worten ist die Hauptgetriebeeinheit und/oder das Optionsgetriebemodul neben dem Achsdifferentialgetriebe angeordnet, wobei das Achsdifferentialgetriebe in dieser Ausführungsform nicht wie üblich in der Mitte der Fahrzeugachse, sondern seitlich neben einem der Räder der Achse angeordnet ist. Die Hauptgetriebeeinheit und/oder das Optionsgetriebemodul ist somit in einem mittleren Bereich der jeweiligen Fahrzeugachse angeordnet oder erstreckt sich zumindest in diesem Bereich. Hierbei kann jedoch vorgesehen sein, dass eine Antriebswelle dieser Fahrzeugachse sich durch die Hauptgetriebeeinheit bzw. durch deren Gehäuse erstreckt. Obwohl die Hauptgetriebeeinheit gegebenenfalls unmittelbar neben dem Differentialgetriebe angeordnet sein kann, ist es nicht erforderlich, dass die Hauptgetriebeeinheit mit dem Differentialgetriebe unmittelbar in Drehmomentfluss steht. Es ist durchaus auch denkbar, dass eine Abtriebswelle des Optionsgetriebemoduls mit dem Achsdifferentialgetriebe in direktem Drehmomentfluss steht. In einer bevorzugten Ausführungsform steht eine Abtriebswelle der Hauptgetriebeeinheit mit dem Achsdifferentialgetriebe in antriebsmäßiger Verbindung. Aufgrund der nebengeordneten Anordnung der Hauptgetriebeeinheit und/oder des Optionsgetriebemoduls und dem Achsdifferentialgetriebe werden die Getriebekomponenten des Fahrzeugs in dem räumlichen Bereich der Antriebsachse des Fahrzeugs konzentriert, so dass in vorteilhafter Weise in einem Bereich zwischen der Antriebsachse und einer weiteren Fahrzeugachse und/oder des Antriebsmotors Bauraum zur Verfügung steht, welcher für andere Fahrzeugkomponenten genutzt werden kann.

In einer ebenfalls bevorzugten Ausführungsform ist die Hauptgetriebeeinheit mit einem gegebenenfalls daran adaptierten Optionsgetriebemodul derart ausgebildet, dass in eingebautem Zustand der Hauptgetriebeeinheit das Optionsgetriebemodul räumlich benachbart zum Achsdifferentialgetriebe angeordnet ist. Eine solche Konfiguration kann derart ausgebildet sein, dass auf der Höhe der Antriebsachse das Achsdifferentialgetriebe und das Optionsgetriebemodul in Richtung der Längsachse der Antriebsachse nebengeordnet bzw. hintereinander angeordnet sind. In einem Bereich unmittelbar vor oder hinter der Antriebsachse bezogen auf die Fahrzeuglängsrichtung ist dann die Hauptgetriebeeinheit angeordnet. Je nachdem, wie das erfindungsgemäße Getriebe tatsächlich ausgebildet ist, steht entweder die Hauptgetriebeeinheit oder das Optionsgetriebemodul direkt mit dem Achsdifferentialgetriebe der Antriebsachse im Drehmomentfluss.

Grundsätzlich ist vorgesehen, dass ein Drehmomentfluss vom Antriebsmotor über die Hauptgetriebeeinheit zur Antriebsachse des Fahrzeugs herstellbar ist. Genauer gesagt kann ein Drehmomentfluss vom Antriebsmotor über das Optionsgetriebemodul und über die Hauptgetriebeeinheit zur Antriebsachse des Fahrzeugs in dieser Reihenfolge herstellbar sein. Hierzu ist die Hauptgetriebeeinheit und das Optionsgetriebemodul entsprechend auszubilden.

In einer bevorzugten Ausführungsform ist der Hauptgetriebeeinheit ein Achsdifferentialgetriebe nachgeordnet. Die Nachordnung bezieht sich insbesondere auf die räumliche Anordnung der Hauptgetriebeeinheit relativ zum Achsdifferentialgetriebe sowie auf den Drehmomentfluss zwischen Hauptgetriebeeinheit und Achsdifferentialgetriebe. Das Achsdifferentialgetriebe ist derart ausgebildet, dass mit diesem zumindest ein Teil der von der Hauptgetriebeeinheit abgegebenen Leistung als Drehmoment oder Drehzahl auf die Antriebsräder der entsprechenden Antriebsachse übertragbar ist. Normalerweise wird nahezu die gesamte von der Hauptgetriebeeinheit abgegebene Leistung auf die Antriebsräder der Antriebsachse übertragen. Falls allerdings ein Teil der von der Hauptgetriebeeinheit abgegebenen Leistung auf eine weitere Antriebsachse des Fahrzeugs übertragen wird, wird nur der verbleibende Teil auf die Antriebsräder der dem Achsdifferentialgetriebe nachgeordneten Antriebsachse übertragen.

Falls das Fahrzeug mehr als eine Antriebsachse aufweist, ist in einer weiteren bevorzugten Ausführungsform eine Getriebeschnittstelle vorgesehen, über welche zumindest ein Teil der der Hauptgetriebeeinheit zugeführten Leistung über eine weitere Abtriebswelle auf eine weitere Antriebsachse des Fahrzeugs übertragbar ist. Die weitere Antriebsachse kann ebenfalls ein Achsdifferentialgetriebe aufweisen. Falls es sich bei dem Fahrzeug um einen Traktor handelt, ist die primäre Antriebsachse die Hinterachse. Die weitere Antriebsachse ist demgemäß die Vorderachse des Traktors. Auf die weitere Antriebsachse wird in Abhängigkeit des Betriebszustands des Traktors ein vorgebbarer Anteil des vom Antriebsmotor des Traktors zur Verfügung gestellten Drehmoments auf die Hinterachse und ein weiterer vorgebbarer Anteil auf die Vorderachse des Traktors übertragen. Das Verhältnis der Drehmomentanteile, welche auf die beiden Fahrzeugachsen übertragen werden, kann stets im Wesentlichen konstant sein. Abgesehen davon, dass die Getriebeschnittstelle derart ausgebildet sein kann, dass ein Drehmomentfluss zur weiteren Antriebsachse ab- und zugeschaltet werden kann, ist in einer bevorzugten Ausführungsform die Getriebeschnittstelle derart betreibbar bzw. ausgebildet, dass das Verhältnis der Drehmomente, welche an die Antriebsachse und an die weitere Antriebsachse abgebbar sind, variierbar ist. Dementsprechend kann die Getriebeschnittstelle wie ein Zwischenachsdifferentialgetriebe betrieben werden. Bevorzugt weisen die auf beide Antriebsachsen übertragenen Drehmomente im Wesentlichen ein Verhältnis von 60:40 auf, nämlich 60 Prozent des Drehmoments wird auf die Hinterachse und 40 Prozent wird auf die Vorderachse des Fahrzeugs übertragen, was bei einem Traktor zweckmäßig ist.

Damit das Fahrzeug mit dem erfindungsgemäßen Getriebe vielseitig eingesetzt werden kann, umfasst in einer bevorzugten Ausführungsform die Hauptgetriebeeinheit eine weitere mechanische Schnittstelle, welche zum Übertragen von mechanischem Drehmoment von der Hauptgetriebeeinheit und/oder dem Optionsgetriebemodul und/oder dem Antriebsmotor auf ein an das Fahrzeug adaptierbares Arbeitsgerät dient. Eine solche Schnittstelle kann in Form einer Zapfwelle ausgebildet sein und demgemäß kompatibel zu im landwirtschaftlichen Bereich eingesetzten Arbeitsgeräten sein. Bevorzugt ist vorgesehen, dass ein Drehmomentfluss vom Antriebsmotor unmittelbar zur Zapfwelle erfolgt, wobei ein Zapfwellengetriebe vorgesehen sein kann, mit welchem die üblicherweise eingesetzten Drehzahlen der Zapfwelle zur Verfügung gestellt werden können. Obwohl der Drehmomentfluss vom Antriebsmotor unmittelbar auf die Zapfwelle erfolgt, kann eine entsprechende Welle sich durch die Hauptgetriebeeinheit und/oder das Optionsgetriebemodul erstrecken.

In einer bevorzugten Ausführungsform ist die Hauptgetriebeeinheit oder das Optionsgetriebemodul mit dem Antriebsmotor über eine Torsionswelle verbindbar. Dementsprechend können die Gehäuse des Antriebsmotors und des erfindungsgemäßen Getriebes getrennt voneinander ausgebildet sein, also nicht in einem Gehäuseblock zusammenhängen. Diese Torsionswelle ist bezüglich ihrer Dimension bzw. bezüglich ihren Eigenschaften derart ausgebildet, dass zumindest eine - vorzugsweise die erste oder niedrigste - Eigenfrequenz des gesamten Getriebes außerhalb des Eigenfrequenzbereichs des nutzbaren Drehzahlbandes liegt. Falls eine solche Torsionswelle verwendet wird, kann auf einen zwischen Antriebsmotor und Getriebe angeordneten Torsionsschwingungsdämpfer bzw. Torsionsschwingungstilger verzichtet werden, so dass in vorteilhafter Weise die Anzahl der Komponenten sowie die Kosten hierfür reduziert werden können.

Alternativ hierzu kann die Hauptgetriebeeinheit oder das Optionsgetriebemodul mit dem Antriebsmotor über eine Antriebswelle verbindbar sein, wobei zwischen der Hauptgetriebeeinheit und dem Antriebsmotor vorzugsweise ein Torsionselement vorgesehen ist. Hierbei ist die Antriebswelle nicht derart ausgelegt, Drehmomentspitzen zwischen Antriebsmotor und Getriebe zu dämpfen, da hierfür das Torsionselement vorgesehen ist, was in Form eines Torsionsschwingungsdämpfers bzw. eines Torsionsschwingungstilgers ausgebildet sein kann.

In einer bevorzugten Ausführungsform ist ein Drehmomentfluss zwischen dem Antriebsmotor und der Hauptgetriebeeinheit über die Torsionswelle oder die Antriebswelle mittels der Kupplungseinheit des Optionsgetriebemoduls herstellbar. Somit kann ein Drehmomentfluss zwischen Antriebsmotor und erfindungsgemäßem Getriebe bzw. Optionsgetriebemodul mit Hilfe der Kupplungseinheit unterbrochen werden. Bei eingerückter Kupplungseinheit ist ein Drehmomentfluss zwischen Antriebsmotor und Optionsgetriebemodul hergestellt. Das vom Optionsgetriebemodul an die Hauptgetriebeeinheit abgegebene Drehmoment wird dann über das Achsdifferentialgetriebe auf die Räder des Fahrzeugs übertragen.

Bevorzugt wird das erfindungsgemäße Getriebe für einen Traktor eingesetzt. Insbesondere ist das Ganggetriebe oder das Gruppengetriebe der Hauptgetriebeeinheit dann als Lastschaltgetriebe ausgebildet, so dass einerseits eine für einen Traktor erforderliche hohe Spreizung des Getriebes und andererseits ein Schalten unter Last möglich ist.

Hinsichtlich einer Hauptgetriebeeinheit wird die eingangs genannte Aufgabe durch die Merkmale des Patentanspruchs 12 gelöst. Demgemäß ist eine Hauptgetriebeeinheit für ein landwirtschaftliches oder industrielles Nutzfahrzeug durch eine Ausgestaltung gekennzeichnet, und zwar derart, dass ein Optionsgetriebemodul nach einem der Patentansprüche 1 bis 11 an der Hauptgetriebeeinheit adaptierbar ist. Insoweit weist die Hauptgetriebeeinheit Bauraum auf, in oder an welchem das Optionsgetriebemodul an der Hauptgetriebeeinheit adaptiert wird, so dass der für die Hauptgetriebeeinheit vorgesehene Bauraum im Wesentlichen auch dann unverändert bleibt, wenn das Optionsgetriebemodul an der Hauptgetriebeeinheit adaptiert ist.

In gleicher Weise wird bezüglich eines Optionsgetriebemoduls die eingangs genannte Aufgabe durch die Merkmale des Patentanspruchs 13 gelöst. Hiernach ist ein Optionsgetriebemodul für ein Getriebe für ein landwirtschaftliches oder industrielles Nutzfahrzeug durch eine Ausgestaltung gekennzeichnet, und zwar derart, dass das Optionsgetriebemodul an eine Hauptgetriebeeinheit nach einem der Patentansprüche 1 bis 11 adaptierbar ist. Da entweder die Hauptgetriebeeinheit oder das Optionsgetriebemodul jeweils derart ausgebildet ist, dass diese bzw. dieses an dem jeweils anderen Element adaptierbar ist, wird zur Vermeidung von Wiederholungen auf den vorangegangenen Teil der Beschreibung verwiesen.

In erfindungsgemäßer Weise kann eine Getriebevielfalt dadurch dargestellt werden, dass unterschiedlich ausgebildete Optionsgetriebemodule an einen Typ von Hauptgetriebeeinheit adaptiert wird. Wie bereits beschrieben, können unterschiedliche Optionsgetriebemodule beispielsweise durch kumulative Adaption mehrerer Optionseinheiten gebildet werden. Alternativ oder zusätzlich kann eine Getriebevielfalt auch durch unterschiedlich ausgebildete Hauptgetriebeeinheiten dargestellt werden, worauf im Folgenden eingegangen wird.

So kann die Hauptgetriebeeinheit dadurch unterschiedlich ausgebildet sein, dass die Eingangswelle, Zwischenwelle und/oder die Ausgangswelle mit unterschiedlichen Zahnrädern bestückt wird. Somit können unterschiedliche Hauptgetriebeeinheiten beispielsweise 9 Vorwärts- und 3 Rückwärtsgänge oder 12 Vorwärts- und 4 Rückwärtsgänge aufweisen, wie bereits beschrieben.

Damit kommt dennoch stets eine Art von Gehäuse für die Hauptgetriebeeinheit zum Einsatz, und es sind in einer bevorzugten Ausführungsform bei unterschiedlicher Bestückung der einzelnen Getriebewellen der Hauptgetriebeeinheit die entsprechenden Schalteinrichtungen jeweils an der gleichen Stelle bzw. räumlichen Position angeordnet. Mit dieser Maßnahme ist es möglich, nachträglich die Eigenschaften der Hauptgetriebeeinheit zu verändern, falls beispielsweise ein mit einem erfindungsgemäßen Getriebe ausgestattetes Fahrzeug neuen oder veränderten Anforderungen gerecht werden muss. Hierzu ist die Hauptgetriebeeinheit zu zerlegen und mit einer anderen Bestückung, beispielsweise anderen Zahnrädern, zu versehen.

Bevorzugt sind bei unterschiedlich ausgebildeten Hauptgetriebeeinheiten die Lagerstellen einer Getriebewelle auch bei unterschiedlicher Bestückung einer Getriebewelle der Hauptgetriebeeinheit jeweils an der gleichen Stelle bzw. räumlichen Position angeordnet. Durch diese Maßnahme kann stets das gleiche Gehäuse für die Hauptgetriebeeinheit verwendet werden, was in vorteilhafter Weise eine wirtschaftliche Darstellung einer großen Anzahl unterschiedlicher Getriebe ermöglicht.

In einer bevorzugten Ausführungsform sind unterschiedliche Getriebeleistungsklassen dadurch bildbar, dass zwischen unterschiedlichen Hauptgetriebeeinheiten der Achsabstand zwischen der Eingangswelle und der Zwischenwelle sowie der Achsabstand zwischen der Zwischenwelle und der Ausgangswelle verändert wird, wobei das Verhältnis der beiden Achsabstände, einerseits zwischen Eingangswelle und Zwischenwelle und andererseits zwischen Zwischenwelle und Ausgangswelle, im Wesentlichen konstant bleibt. Hierzu sind für unterschiedliche Getriebeleistungsklassen unterschiedliche Gehäuse für Hauptgetriebeeinheiten vorzusehen, da die Achsabstände der Eingangswelle und der Ausgangswelle und somit die Lagerstellen für diese Wellen zu variieren sind. Unter Umständen können jedoch bei unterschiedlichen Gehäusen der Hauptgetriebeeinheiten die Schalteinrichtungen jeweils an den gleichen Stellen bzw. räumlichen Positionen angeordnet werden.

Wie bereits angedeutet, wird das erfindungsgemäße Getriebe nach einem der Patentansprüche 1 bis 11 bevorzugt für ein landwirtschaftliches oder industrielles Nutzfahrzeug, insbesondere für einen Traktor, eingesetzt.

In verfahrensmäßiger Hinsicht wird die eingangs genannte Aufgabe durch die Verfahrensschritte des Herstellungsverfahrens nach Patentanspruch 15 gelöst. Demnach ist das erfindungsgemäße Verfahren zum Herstellen eines Getriebes nach einem der Patentansprüche 1 bis 11 dadurch gekennzeichnet, dass das Optionsgetriebemodul an der Hauptgetriebeeinheit des Getriebes derart montiert wird, dass das Optionsgetriebemodul in eine Gehäuseöffnung der Hauptgetriebeeinheit eingebracht wird. Das Optionsgetriebemodul wird entlang mindestens einer Richtung derart verschoben, dass zwischen dem Optionsgetriebemodul und der Hauptgetriebeeinheit eine Welle-Nabe-Verbindung hergestellt wird. Das Optionsgetriebemodul wird an der Hauptgetriebeeinheit fixiert, und zwar vorzugsweise am Gehäuse der Hauptgetriebeeinheit. Voraussetzung für die Anwendung des erfindungsgemäßen Herstellungsverfahrens ist eine entsprechende Ausbildung der Hauptgetriebeeinheit sowie des Optionsgetriebemoduls, und zwar derart, dass einerseits das Optionsgetriebemodul in der Gehäuseöffnung der Hauptgetriebeeinheit entlang mindestens einer Richtung bewegt bzw. verschoben werden kann. Andererseits ist zwischen der Hauptgetriebeeinheit und dem Optionsgetriebemodul eine Schnittstelle in Form einer Welle-Nabe-Verbindung vorgesehen, welche durch ein Verschieben des Optionsgetriebemoduls relativ zur Hauptgetriebeeinheit hergestellt werden kann.

Wie bereits erwähnt, sind unterschiedliche Optionsgetriebemodule vorgesehen, welche an die Hauptgetriebeeinheit adaptiert werden können. Gemäß einer bevorzugten Ausführungsform können mehrere Optionseinheiten zu einem Optionsgetriebemodul dadurch zusammengebaut werden, dass jeweils eine Optionseinheit mit ihrem Basis-Gehäuseteil an einem Basis-Gehäuseteil einer anderen Optionseinheit befestigt wird. Hierdurch können in vorteilhafter Weise unterschiedliche Optionsgetriebemodule mit stets im Wesentlichen gleich ausgebildeten einzelnen Bauteilen bzw. Basis-Gehäuseteilen modular und kostengünstig hergestellt werden, ohne dass für jedes unterschiedlich ausgestaltete Optionsgetriebemodul jeweils ein eigenes, unter Umständen komplex ausgebildetes Gesamtgehäuse vorzusehen ist.

Es gibt nun verschiedene Möglichkeiten, die Lehre der vorliegenden Erfindung in vorteilhafter Weise auszugestalten und weiterzubilden. Dazu wird auf die nachfolgende Erläuterung der bevorzugten Ausführungsbeispiele der Erfindung anhand der Zeichnungen verwiesen. In Verbindung mit der Erläuterung der bevorzugten Ausführungsbeispiele der Erfindung anhand der Zeichnungen werden auch im Allgemeinen bevorzugte Ausgestaltungen und Weiterbildungen der erfindungsgemäßen Lehre erläutert. In den Zeichnungen zeigen jeweils in einer schematischen Darstellung:
- Fig. 1: eine perspektivische Ansicht eines ersten Ausfüh- rungsbeispiels eines erfindungsgemäßen Getriebes,
- Fig. 2: eine perspektivische Ansicht des Getriebes aus Fig. 1 in einem hierfür vorgesehenen Getriebegehäuse,
- Fig. 3: eine perspektivische Aufsicht eines zweiten Ausfüh- rungsbeispiels eines erfindungsgemäßen Getriebes,
- Fig. 4: eine perspektivische Aufsicht des Getriebes aus Fig. 3 in dem hierfür vorgesehenen Getriebegehäuse,
- Fig. 5: eine perspektivische Ansicht eines Gehäuseteils einer Optionseinheit des Optionsgetriebemoduls in einer ersten Ausbaustufe,
- Fig. 6: eine perspektivische Ansicht mehrerer aneinander mon- tierter Gehäuseteile von Optionseinheiten des Opti- onsgetriebemoduls in einer zweiten Ausbaustufe,
- Fig. 7: eine perspektivische Ansicht mehrerer aneinander mon- tierter Gehäuseteile von Optionseinheiten des Opti- onsgetriebemoduls in einer dritten Ausbaustufe,
- Fig. 8: ein Stick-Diagramm eines Ausführungsbeispiels eines erfindungsgemäßen Getriebes mit einer Hauptgetriebe- einheit und einem Optionsgetriebemodul in jeweils ei- ner Ausbaustufe,
- Fig. 9: ein Stick-Diagramm eines weiteren Ausführungsbei- spiels eines erfindungsgemäßen Getriebes mit einer Hauptgetriebeeinheit und einem Optionsgetriebemodul in jeweils einer anderen Ausbaustufe,
- Fig. 10A: eine schematische Darstellung einer aus dem Stand der Technik bekannten Konfiguration hinsichtlich einer Eingangswelle und einer Ausgangswelle eines Getriebes in eingebautem Zustand in einem Fahrzeug,
- Fig. 10B: eine schematische Darstellung einer Konfiguration hinsichtlich einer Eingangswelle und einer Ausgangs- welle eines erfindungsgemäßen Getriebes in eingebau- tem Zustand in einem Fahrzeug,
- Fig. 11: eine schematische Darstellung einer Aufsicht einer Fahrzeugkonfiguration mit einem aus dem Stand der Technik bekannten Getriebe,
- Fig. 12: eine schematische Darstellung einer Seitenansicht der Fahrzeugkonfiguration aus Fig. 11,
- Fig. 13: eine schematische Darstellung einer Aufsicht einer Fahrzeugkonfiguration mit einem erfindungsgemäßen Ge- triebe,
- Fig. 14: eine schematische Darstellung einer Seitenansicht der Fahrzeugkonfiguration aus Fig. 13, und
- Fig. 15: eine schematische Darstellung einer perspektivischen Ansicht der Fahrzeugkonfiguration aus den Fig. 13 und 14.

Gleiche oder ähnliche Bauteile bzw. Baugruppen sind hierbei mit gleichen Bezugszeichen gekennzeichnet.

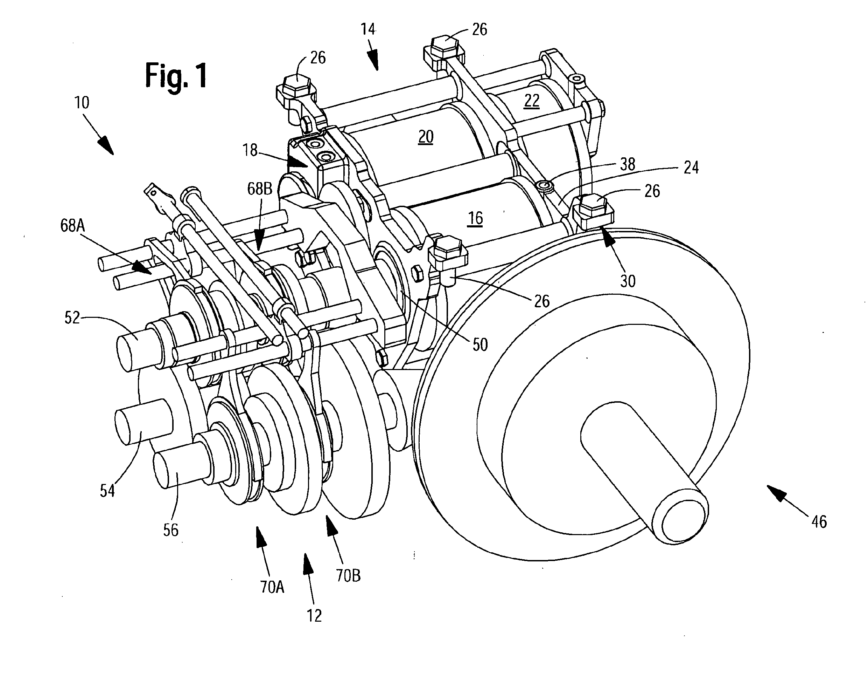

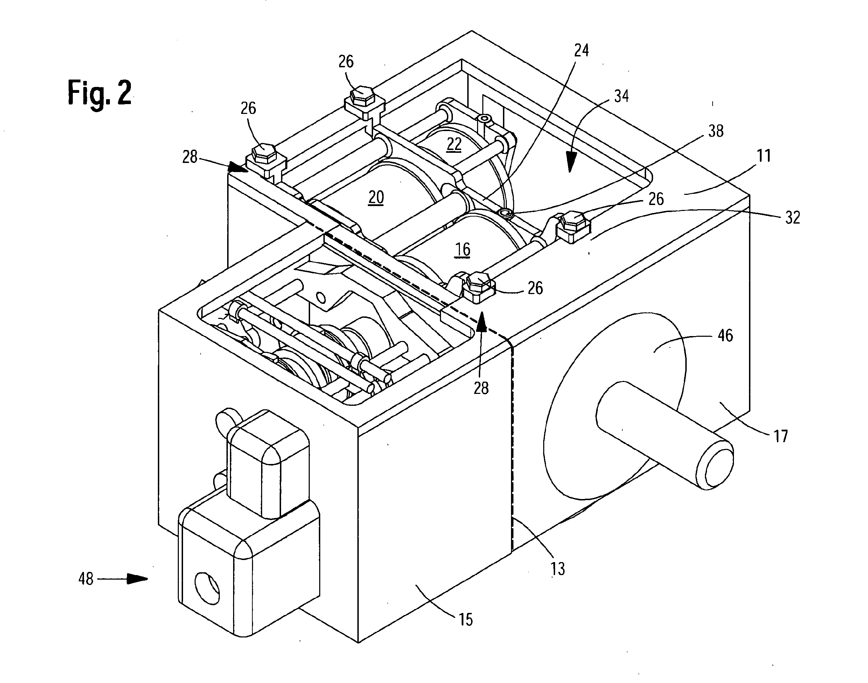

Fig. 1 und 2 zeigen das gleiche Getriebe 10 in einer perspektivischen Ansicht, und zwar in Fig. 1 ohne Getriebegehäuse und in Fig. 2 mit Getriebegehäuse 11. Das Getriebe 10 umfasst mindestens eine für sich gesehen funktionsfähige Hauptgetriebeeinheit 12 und ein an die Hauptgetriebeeinheit 12 adaptiertes Optionsgetriebemodul 14. Die Hauptgetriebeeinheit 12 weist ein Ganggetriebe und ein Gruppengetriebe auf, worauf später eingegangen wird. Mit dem Optionsgetriebemodul 14 ist die Funktion des Getriebes 10 erweiterbar, beispielsweise um die Funktion einer Kupplungseinheit 16, einer Kriechgang-Einheit 18 und einer Zwei-Stufen-Getriebeeinheit (High-Low) 20. Das Getriebe 10 dient zum Übertragen eines von einem Antriebsmotor erzeugten Drehmoments auf mindestens eine Antriebsachse eines landwirtschaftlichen Nutzfahrzeugs, insbesondere eines Traktors, wobei weder der Antriebsmotor noch die Antriebsachse in Fig. 1 und 2 gezeigt sind.

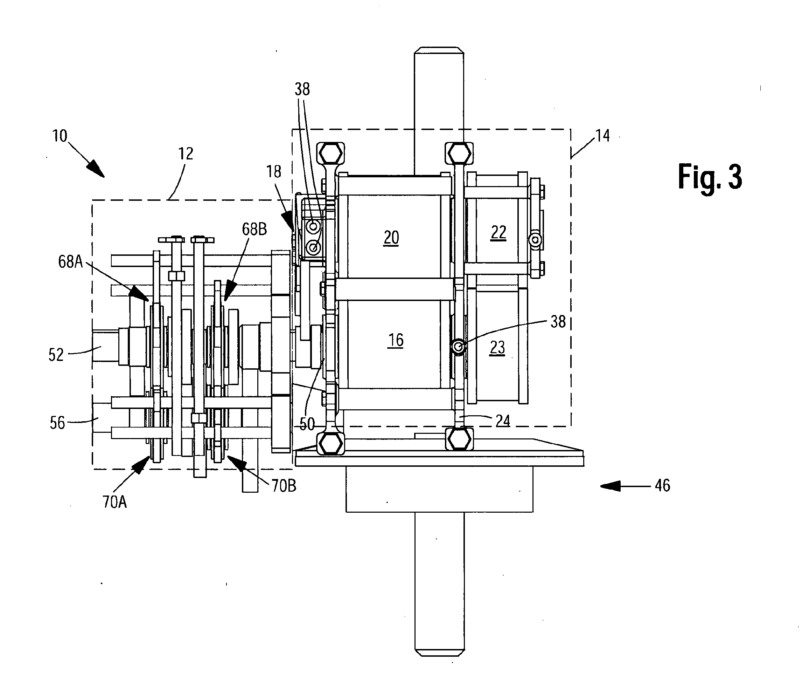

Erfindungsgemäß sind die Hauptgetriebeeinheit 12 und das Optionsgetriebemodul 14 derart ausgebildet, dass der für das Getriebe 10 vorgesehene Bauraum im Wesentlichen auch dann unverändert ist, wenn das Optionsgetriebemodul 14 an der Hauptgetriebeeinheit 12 adaptiert ist. Unabhängig von der Ausgestaltung oder Ausbaustufe des Optionsgetriebemoduls 14 wird ein vorgebbarer maximaler Bauraum des aus Optionsgetriebemodul 14 und der Hauptgetriebeeinheit 12 gebildeten Getriebes 10 nicht überschritten. Dies wird in diesem Ausführungsbeispiel dadurch erzielt, dass das Optionsgetriebemodul 14 stets an bzw. in demselben vorgegebenen Teilbereich des Getriebes 10 räumlich angeordnet ist. Demgemäß ist die Hauptgetriebeeinheit 12 derart ausgebildet, dass von dieser stets der Bauraum für das Optionsgetriebemodul 14 zur Verfügung gestellt wird. Der Bauraum für das Optionsgetriebemodul 14 ist in dem Getriebegehäuse 11 stets an der gleichen Stelle vorgesehen, und zwar unabhängig von der Ausbaustufe des Optionsgetriebemoduls 14. In Fig. 3 ist mit den gestrichelt eingezeichneten Umrandungen angedeutet, welche Bauteile in dieser Aufsichtsdarstellung zur Hauptgetriebeeinheit 12 und welche Bauteile zum Optionsgetriebemodul 14 gehören. Das Getriebegehäuse 11 kann einteilig ausgebildet sein. Das Getriebegehäuse 11 kann jedoch auch zwei- oder mehrteilig ausgebildet sein. So ist beispielsweise mit der in Fig. 2, 4 und 15 gestrichelt eingezeichneten Linie 13 jeweils angedeutet, dass hier das Getriebegehäuse 11 aus zwei Gehäuseteilen 15 und 17 zusammengesetzt werden kann. Befestigungselemente zum Befestigen der beiden Gehäuseteile 15 und 17 aneinander, wie beispielsweise Schrauben, sind in Fig. 2, 4 und 15 nicht eingezeichnet.

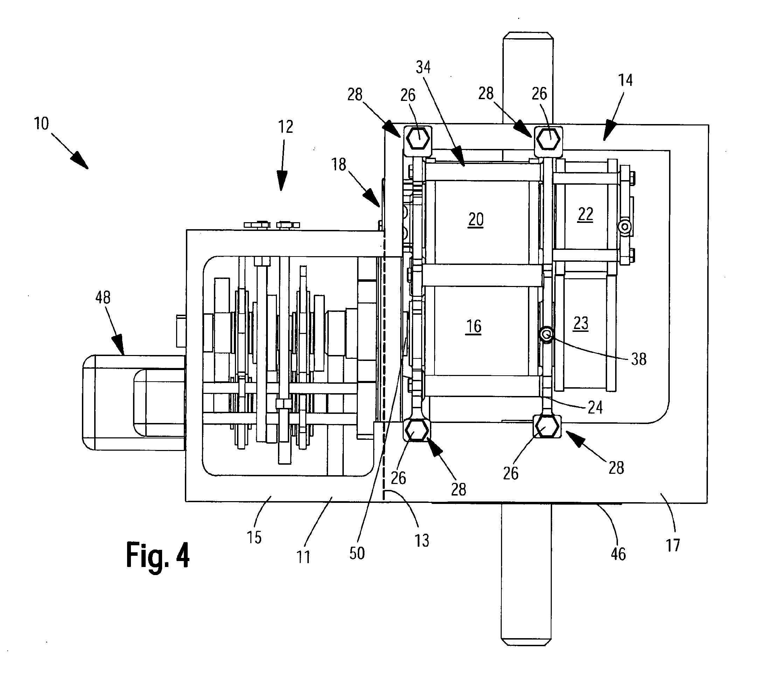

In Fig. 1 bis 4 weist das Optionsgetriebemodul 14 vier Optionseinheiten auf, und zwar eine Kupplungseinheit 16, eine Kriechgang-Einheit 18, eine Zwei-Stufen-Getriebeeinheit (High-Low) 20 und eine Reversiereinheit 22. Die Zwei-Stufen-Getriebeeinheit (High-Low) 20 ist derart ausgebildet, dass diese kraftschlüssig auch unter Last schaltbar ist. In Fig. 3 und 4 ist ferner eine Kupplung 23 für das Zapfwellengetriebe gezeigt.

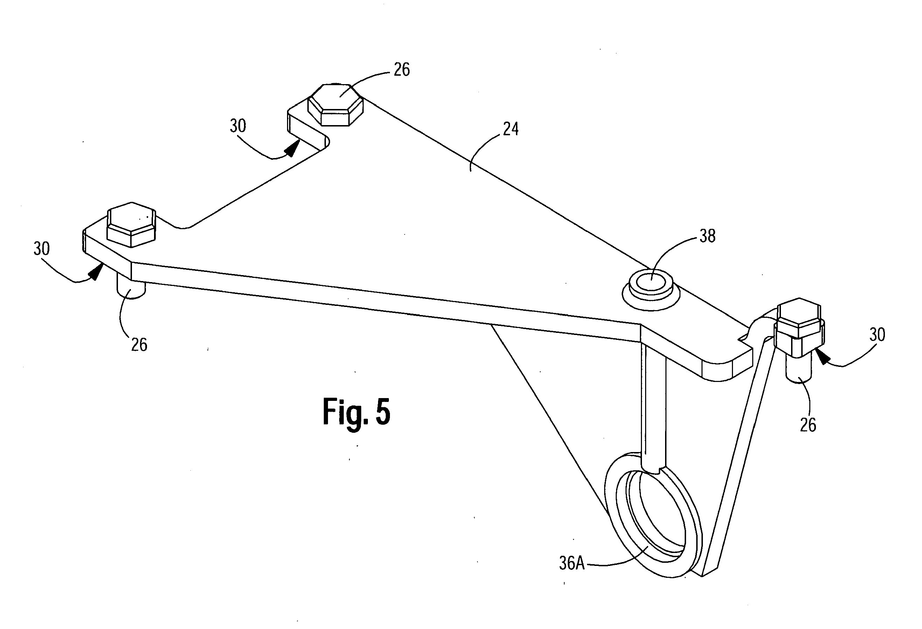

Sowohl das in Fig. 1 und 2 gezeigte als auch in Fig. 3 und 4 gezeigte Optionsgetriebemodul 14 weist ein Basis-Gehäuseteil 24 auf. An dieses Basis-Gehäuseteil 24 ist zumindest die Kupplungseinheit 16 adaptierbar. Fig. 5 zeigt in einer perspektivischen Ansicht ein Basis-Gehäuseteil 24, an welches lediglich eine in Fig. 5 nicht gezeigte Kupplungseinheit 16 adaptierbar ist. Dieses Basis-Gehäuseteil 24 ist also lediglich dann entsprechend Fig. 5 ausgestaltet , wenn neben einer Kupplungseinheit 16 keine weitere Optionseinheit des Optionsgetriebemoduls 14 vorgesehen ist.

Damit das Optionsgetriebemodul 14 an dem Getriebegehäuse 11 in einer geeigneten Relativposition zur Hauptgetriebeeinheit 12 angeordnet bzw. positioniert ist, weist das Basis-Gehäuseteil 24 des Optionsgetriebemoduls 14 mehrere Positioniermittel 26 auf. An der Hauptgetriebeeinheit 12 bzw. an dem Getriebegehäuse 11 sind mehrere zum Positioniermittel 26 komplementär ausgebildete weitere Positioniermittel 28 vorgesehen, welche jeweils in Form eines Sacklochs ausgeführt sind. Dementsprechend hat der Teil eines Positioniermittels 26, welcher in das Sackloch eingeführt wird, im Wesentlichen die Form eines Stifts. Das Positioniermittel 26 und das weitere Positioniermittel 28 sind derart angeordnet, dass das Optionsgetriebemodul 14 bezüglich seiner räumlichen Position und Orientierung relativ zur Hauptgetriebeeinheit 12 positionierbar ist, wenn die Positioniermittel 26, 28 aneinander zur Anlage kommen. Die Positioniermittel 26, 28 weisen jeweils eine gemeinsame Anschlagfläche 30, 32 auf. Die Anschlagfläche 30 ist die in Fig. 1 bis 5 verdeckt gezeigte untere Fläche des Basis-Gehäuseteils 24. Die Anschlagfläche 32 ist die in Fig. 2 und 4 gezeigte Fläche des Getriebegehäuses 11, auf welcher ein in Fig. 2 und 4 nicht gezeigter Getriebedeckel adaptiert wird. Somit kann das Optionsgetriebemodul 14 in vorteilhafter Weise einfach und zeitsparend an der Hauptgetriebeeinheit 12 adaptiert und justiert werden, indem zunächst das Optionsgetriebemodul 14 von oben in die hierfür vorgesehene Öffnung 34 des Getriebegehäuses 11 eingebracht wird. Sodann wird eine Welle-Nabe-Verbindung zwischen der Hauptgetriebeeinheit 12 und dem Optionsgetriebemodul 14 hergestellt und die Anschlagflächen 30, 32 des Basis-Gehäuseteils 24 und des Getriebegehäuses 11 kommen aneinander zur Anlage. Das Positioniermittel 26 wird in das weitere Positioniermittel 28 eingeführt. Hierdurch ist das Optionsgetriebemodul 14 relativ zur Hauptgetriebeeinheit 12 positioniert.

Die Optionseinheit bzw. die Kupplungseinheit 16 des Optionsgetriebemoduls 14 aus Fig. 3 und 4 weist ein (Basis-) Gehäuseteil 24 auf, welches eine in Fig. 3 und 4 nicht sichtbare Welle drehbar lagert. Bei dem in Fig. 5 gezeigten Gehäuseteil 24 ist das Lager 36A für die in Fig. 5 ebenfalls nicht eingezeichnete Welle der entsprechenden Optionseinheit gezeigt. Das Gehäuseteil 24 weist einen Getriebeölanschluss 38 auf, welcher mit einem in Fig. 3 und 4 nicht gezeigten Getriebedeckel des Getriebegehäuses 11 in Verbindung steht. Das Gehäuseteil 24 umfasst dementsprechend einen darin verlaufenden Getriebeölkanal, über welchen das hydraulische Schaltelement für die Kupplungseinheit 16 betätigbar ist und/oder über welchen die Welle der Kupplungseinheit 16 geschmiert werden kann.

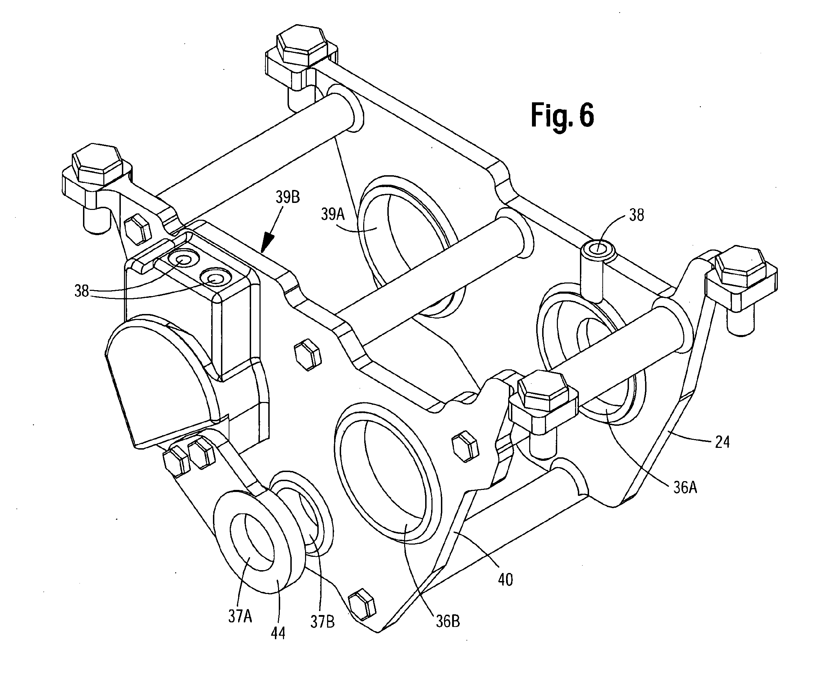

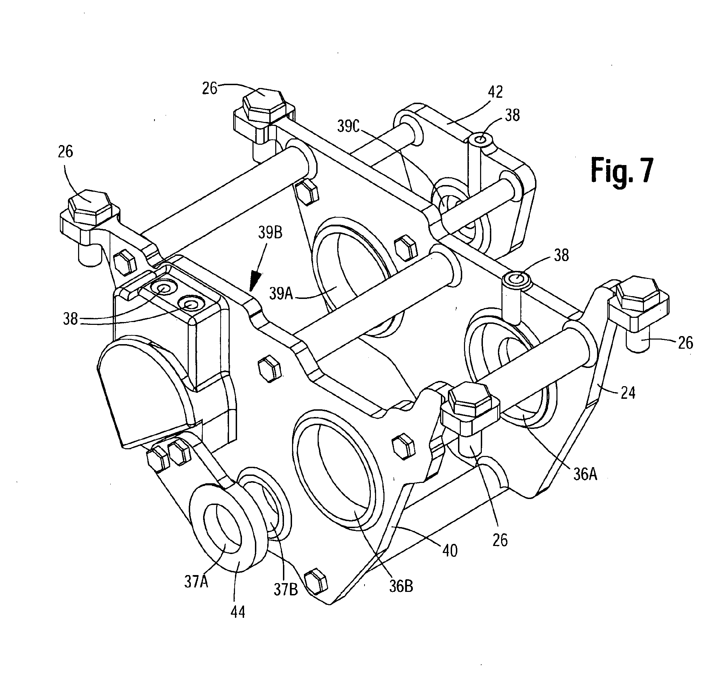

Unterschiedliche Optionen des Optionsgetriebemoduls 14 können durch eine modulare, kumulierte Adaption mehrerer Optionseinheiten nebst Gehäuseteilen dargestellt werden. Hierzu sind die Gehäuseteile derart ausgebildet, dass diese aneinander montiert werden können. Dies ist beispielsweise Fig. 6 und 7 entnehmbar. Hierbei ist jeweils an dem Basis-Gehäuseteil 24 aus Fig. 6 ein weiteres Gehäuseteil 40 montiert. Fig. 6 zeigt neben den Gehäuseteilen 24, 40 ein weiteres Gehäuseteil 44 eines Optionsgetriebemoduls 14, welches als Optionseinheiten die Kupplungseinheit 16, die Kriechgang-Einheit 18 und die Zwei-Stufen-Getriebeeinheit (High-Low) 20 aufweist. Zwischen dem Gehäuseteil 44 und dem Gehäuseteil 40 ist die Kriechgang-Einheit 18 angeordnet. Für deren Welle sind die Lagerstellen 37A und 37B vorgesehen. Für die Welle der Kupplungseinheit 16 sind die Lagerstellen 36A und 36B vorgesehen. Zwischen dem Gehäuseteil 40 und dem Gehäuseteil 24 ist die Kupplungseinheit 16 und die Zwei-Stufen-Getriebeeinheit (High-Low) 20 angeordnet, siehe beispielsweise Fig. 1 bis 4. Für die Welle der Zwei-Stufen-Getriebeeinheit 20 sind die Lagerstellen 39A und 39B vorgesehen, wobei die Lagerstelle 39B im Gehäuseteil 40 angeordnet ist und in dieser perspektivischen Ansicht nicht sichtbar ist. Das Gehäuseteil 40 weist auch eine Lagerstelle 36B auf. Fig. 7 zeigt zusätzlich zu den in Fig. 6 gezeigten Gehäuseteilen 24, 40 und 44 ein weiteres Gehäuseteil 42. Zwischen dem Gehäuseteil 42 und dem Basis-Gehäuseteil 24 ist die Reversiereinheit 22 angeordnet, siehe beispielsweise Fig. 1 bis 4. Für die Welle der Reversiereinheit 22 ist die Lagerstelle 39A des Basis-Gehäuseteils 24 und die Lagerstelle 39C des Gehäuseteils 42 vorgesehen.

Somit können unterschiedlich ausgebildete Optionsgetriebemodule 14 dadurch bereitgestellt werden, dass entsprechende Gehäuseteile 24, 40 und 44 nebst entsprechenden Optionseinheiten aneinander montiert werden und anschließend in das Getriebegehäuse 11 des Getriebes 10 eingebracht und mit der Hauptgetriebeeinheit 12 verbunden werden. Hierdurch ist in vorteilhafter Weise die Funktion des Optionsgetriebemoduls erweiterbar.

Wie bereits angedeutet, nimmt das Getriebegehäuse 11 die Hauptgetriebeeinheit 12 in sich auf, siehe beispielsweise Fig. 3 und 4. Das Getriebegehäuse 11 ist derart ausgebildet, dass das Optionsgetriebemodul 14 zumindest weitgehend in dem Getriebegehäuse 11 montierbar ist. Zwischen dem Optionsgetriebemodul 14 und der Hauptgetriebeeinheit 12 ist über die Kupplungseinheit 16 ein Drehmomentfluss mittelbar herstellbar.

An bzw. in dem Getriebegehäuse 11 ist das Hinterachsdifferentialgetriebe 46 adaptierbar. In den in Fig. 2 und 4 gezeigten Ausführungsbeispielen ist das Hinterachsdifferentialgetriebe 46 sogar nahezu vollständig in dem Getriebegehäuse 11 untergebracht, wobei das Hinterachsdifferentialgetriebe 46 in Fahrtrichtung des in Fig. 1 bis 4 nicht gezeigten Traktors auf der linken Seite und nicht wie üblich mittig bezüglich der Hinterachse angeordnet ist. Fig. 2 ist entnehmbar, dass eine Schnittstelle 48 für einen mechanischen Einzelradantrieb der Vorderachse des Traktors adaptierbar ist.

Neben der Hauptgetriebeeinheit 12 ist auch das Optionsgetriebemodul 14 in Form eines für sich gesehen eigenständigen oder für sich gesehen funktionsfähigen Getriebes ausgeführt. Dem Optionsgetriebemodul 14 sind eigene Betätigungseinrichtungen, insbesondere zur Betätigung von Kupplungen des Optionsgetriebemoduls 14 mittels hydraulischer Schaltelemente, angeordnet, welche in Fig. 1 bis 4 nicht sichtbar sind, jedoch über die Getriebeölanschlüsse 38 mit druckbeaufschlagtem Getriebeöl geschaltet werden können.

Das Optionsgetriebemodul 14 ist mit einer Welle-Nabe-Verbindung 50 an die Hauptgetriebeeinheit 12 reversibel adaptierbar. Die Welle-Nabe-Verbindung 50 ist in Fig. 1, 3 und 4 lediglich andeutungsweise erkennbar und ist formschlüssig drehmomentfest ausgebildet, wobei das Optionsgetriebemodul 14 eine Welle mit einer Außenverzahnung und die daran adaptierbare Welle der Hauptgetriebeeinheit 12 einen Hohlwellenbereich mit einer Innenverzahnung aufweist.

Das Optionsgetriebemodul 14 ist reversibel in bzw. an der Hauptgetriebeeinheit 12 adaptierbar, wobei das Optionsgetriebemodul 14 auch nachträglich von der Hauptgetriebeeinheit 12 entfernt werden kann, um beispielsweise zu Servicezwecken andere Komponenten in dem Getriebegehäuse 11 zu warten oder nachträglich ein Optionsgetriebemodul 14 mit anderen Optionseinheiten in das Getriebe 10 einzubauen.

Die Hauptgetriebeeinheit 12 ist als Drei-Wellen-Getriebe ausgeführt. Die drei Getriebewellen 52, 54 und 56 sind parallel zueinander in der Hauptgetriebeeinheit 12 angeordnet. Es handelt sich um die Eingangswelle 52, die Zwischenwelle 54 und die Ausgangswelle 56. Die Eingangswelle 52 der Hauptgetriebeeinheit 12 ist in Form einer Hohlwelle ausgebildet.

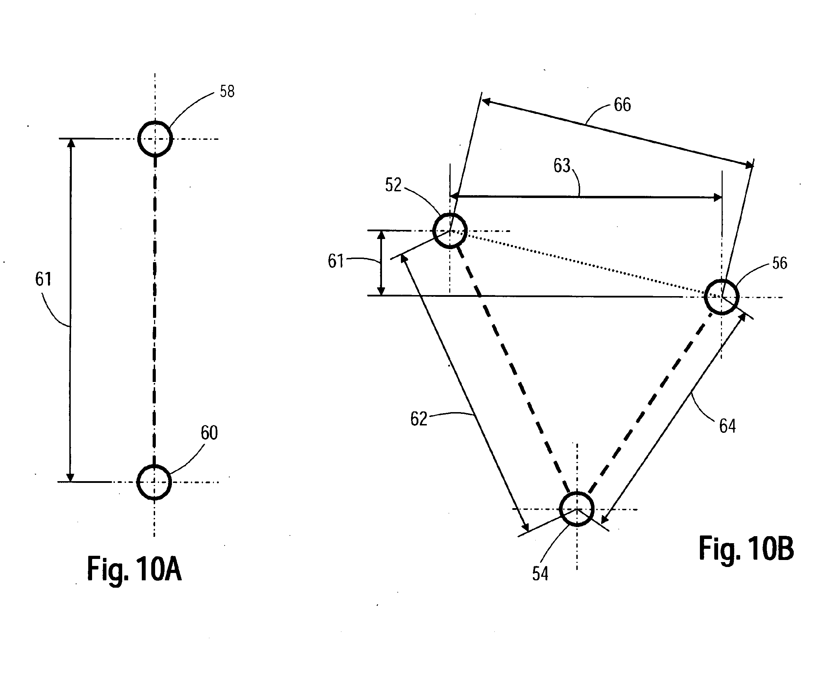

Fig. 10A zeigt in einer Schnittansicht quer zu den Getriebewellen 58, 60 die üblicherweise vorliegende Konfiguration eines Getriebes eines Traktors, welches eine Eingangswelle 58 und eine Ausgangswelle 60 aufweist. Demgemäß ist die Eingangswelle 58 in vertikaler Richtung unmittelbar oberhalb der Ausgangswelle 60 angeordnet. Dementsprechend baut ein solches Getriebe relativ hoch und schmal.

Fig. 10B zeigt in einer Schnittansicht in einer Ebene quer zu den Getriebewellen 52, 54 und 58 der Hauptgetriebeeinheit 12 deren räumliche Anordnung zueinander. Dementsprechend ist die Hauptgetriebeeinheit 12 derart ausgestaltet, dass in einem Zustand, in welchem die Hauptgetriebeeinheit 12 bzw. das Getriebe 10 in einem Fahrzeug eingebaut ist, die Position der Ausgangswelle 56 in horizontaler Richtung und in vertikaler Richtung zur Position der Eingangswelle 52 versetzt angeordnet ist. Weiterhin ist die Position der Zwischenwelle 54 in vertikaler Richtung zur Position der Ausgangswelle 56 und zur Position der Eingangswelle 52 versetzt angeordnet. Die Position der Zwischenwelle 54 ist in horizontaler Richtung zur Position der Eingangswelle 52 und zur Position der Ausgangswelle 56 versetzt angeordnet. Dementsprechend kann Fig. 10B entnommen werden, dass zumindest die Hauptgetriebeeinheit 12 des erfindungsgemäßen Getriebes 10 in vertikaler Richtung betrachtet einen geringeren Abstand 61 zwischen Eingangswelle 52 und Ausgangswelle 56 aufweist, als das bei einem aus dem Stand der Technik gemäß Fig. 10A gezeigten Getriebe der Fall ist. Dementsprechend baut die Hauptgetriebeeinheit 12 in vertikaler Richtung nicht notwendigerweise ebenso hoch wie ein aus dem Stand der Technik bekanntes Getriebe, dessen Eingangswelle 58 und Ausgangswelle 60 unmittelbar übereinander liegt (siehe Fig. 10A). Da die Eingangswelle 52 und die Ausgangswelle 56 in horizontaler Richtung den Abstand 63 aufweisen, baut die Hauptgetriebeeinheit 12 in horizontaler Richtung breiter als ein aus dem Stand der Technik üblicherweise für einen Traktor verwendetes Getriebe (siehe beispielsweise Fig. 10A). Die Achsabstände 62, 64 und 66 zwischen den drei Getriebewellen 52, 54 und 56 weisen jeweils unterschiedliche Werte auf, wobei der Achsabstand zwischen der Eingangswelle 52 und der Zwischenwelle 54 mit dem Bezugszeichen 62, der Achsabstand zwischen der Zwischenwelle 54 und der Ausgangswelle 56 mit dem Bezugszeichen 64 und der Achsabstand zwischen der Ausgangswelle 56 und der Eingangswelle 52 mit dem Bezugszeichen 66 gekennzeichnet ist.

Unterschiedliche Getriebeleistungsklassen können dadurch gebildet werden, dass zwischen unterschiedlichen Hauptgetriebeeinheiten 12 der Achsabstand 62 zwischen der Eingangswelle 52 und der Zwischenwelle 54, sowie der Achsabstand 64 zwischen der Zwischenwelle 54 und der Ausgangswelle 56 verändert wird , wobei das Verhältnis der beiden Achsabstände 62, 64 einerseits zwischen Eingangswelle 52 und Zwischenwelle 54 und andererseits zwischen Zwischenwelle 54 und Ausgangswelle 56 im Wesentlichen konstant bleibt. Aus solchen unterschiedlichen Getriebeleistungsklassen kann eine Getriebebaureihe gebildet werden.

Fig. 1 und 3 ist entnehmbar, dass die Eingangswelle 52 zwei Schalteinrichtungen 68A, 68B aufweist. Die Ausgangswelle 56 weist ebenfalls zwei Schalteinrichtungen 70A, 70B auf. Die Schalteinrichtungen 68A, 68B, 70A, 70B sind formschlüssig synchronisiert schaltbar ausgebildet, weisen also jeweils eine Schaltgabel und eine Schaltmuffe auf.

Die in Fig. 1 bis 4 gezeigten Schalteinrichtungen 68A, 68B, 70A, 70B sind jeweils an der gleichen Position relativ zum Getriebegehäuse 11 angeordnet, falls die einzelnen Getriebewellen 52, 54 und 56 der Hauptgetriebeeinheit 12 für Getriebe 10 unterschiedlicher Eigenschaften unterschiedlich, beispielsweise mit unterschiedlichen Zahnrädern, bestückt sind. Die in Fig. 1 bis 4 nicht sichtbar gezeigten Lagerstellen der Getriebewellen 52, 54 und 56 der Hauptgetriebeeinheit 12 sind auch bei unterschiedlicher Bestückung der Getriebewellen 52, 54 und 56 der Hauptgetriebeeinheit 12 für Getriebe 10 unterschiedlicher Eigenschaften jeweils an der gleichen Position an dem Getriebegehäuse 11 angeordnet.

In Abhängigkeit der Schaltzustände der Schalteinrichtungen 68A, 68B, 70A, 70B ist ein Drehmomentfluss von der Eingangswelle 52 über die Zwischenwelle 54 zur Ausgangswelle 56 oder von der Eingangswelle 52 unmittelbar zur Ausgangswelle 56 herstellbar.

Die Eingangswelle 52 weist Zahnräder und zwei Schalteinrichtungen 68A, 68B für das Ganggetriebe des Traktors auf, in welchen das Getriebe 10 eingebaut wird. Die Ausgangswelle 56 weist Zahnräder und zwei Schalteinrichtungen 70A, 70B für das Gruppengetriebe auf.

Das Getriebegehäuse 11 der Hauptgetriebeeinheit 12 weist eine zur Montage des Optionsgetriebemoduls 14 dienende Gehäuseöffnung 34 auf. Zur Montage des Optionsgetriebemoduls 14 wird dieses in die Gehäuseöffnung 34 eingebracht. Die Gehäuseöffnung 34 ist im Zusammenwirken mit dem Optionsgetriebemodul 14 derart ausgebildet, dass das Optionsgetriebemodul 14 bei einem in die Gehäuseöffnung 34 eingebrachten Zustand in Richtung zur Hauptgetriebeeinheit 12 verschoben werden kann, damit eine Welle-Nabe-Verbindung zwischen der Hauptgetriebeeinheit 12 und dem Optionsgetriebemodul 14 hergestellt werden kann.

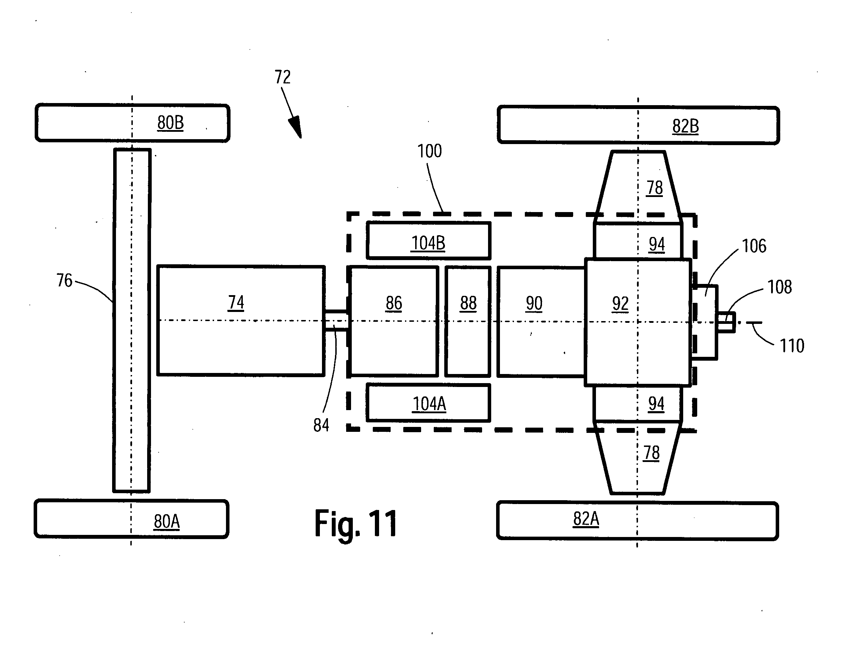

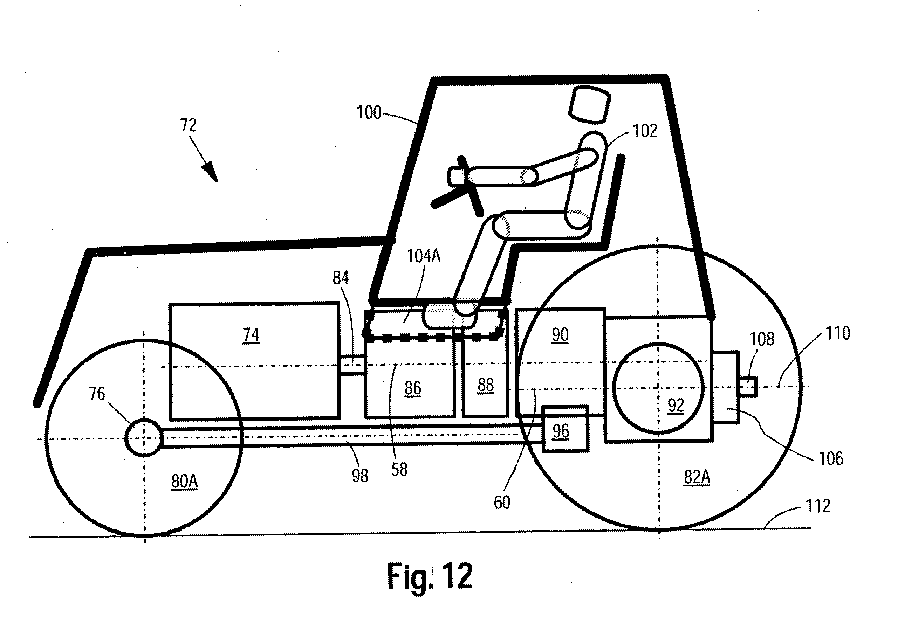

Fig. 11 und 12 zeigen in einer schematischen Darstellung eine Aufsicht bzw. eine Seitenansicht einer Getriebekonfiguration, wie sie bei einem Traktor aus dem Stand der Technik bekannt ist. So weist der Traktor 72 einen Verbrennungsmotor 74, eine Vorderachse 76 sowie eine Hinterachse 78 auf. Der Vorderachse 76 sind zwei Vorderräder 80A, 80B und der Hinterachse 78 sind zwei Hinterräder 82A, 82B zugeordnet. Das von dem Verbrennungsmotor 74 erzeugte Drehmoment wird über die Antriebswelle 84 zunächst auf das Ganggetriebe 86 übertragen. Dem Ganggetriebe 86 ist ein Optionsgetriebe 88 und ein Gruppengetriebe 90 nachgeordnet. Vom Gruppengetriebe 90 wird ein Drehmoment über das Hinterachsdifferentialgetriebe 92 über den Endantrieb mit Bremse 94 auf die Hinterräder 82A, 82B übertragen. Es kann jedoch über die Schnittstelle 96 für den mechanischen Vorderradantrieb und die zugehörige Antriebswelle 98 Drehmoment auf die Vorderräder 80A, 80B übertragen werden, falls dieser zugeschaltet ist.

Der Bereich der Fahrerkabine ist mit dem Bezugszeichen 100 , der Bediener des Traktors 72 mit dem Bezugszeichen 102 gekennzeichnet. Da die Eingangswelle 58 vergleichbar zu Fig. 10A in vertikaler Richtung oberhalb der Ausgangswelle 60 angeordnet ist, baut die in Fig. 11 und 12 gezeigte Getriebekonfigurationen 86, 88 und 90 relativ hoch, so dass dem Bediener 102 in der Kabine 100 zum Einnehmen einer bequemen Sitzposition für seine Beine bzw. Füße letztendlich nur der Fußraum 104A und 104B links und rechts neben den Ganggetriebe 86 und dem Optionsgetriebe 88 verbleibt. Das Zapfwellengetriebe 106 mit der Zapfwelle 108 ist dem Hinterachsdifferentialgetriebe 92 nachgeordnet.

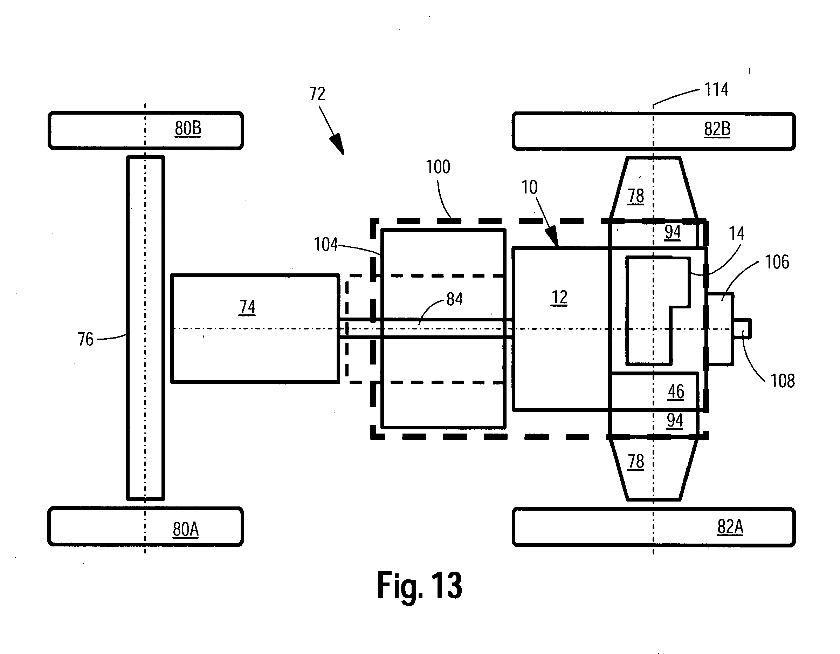

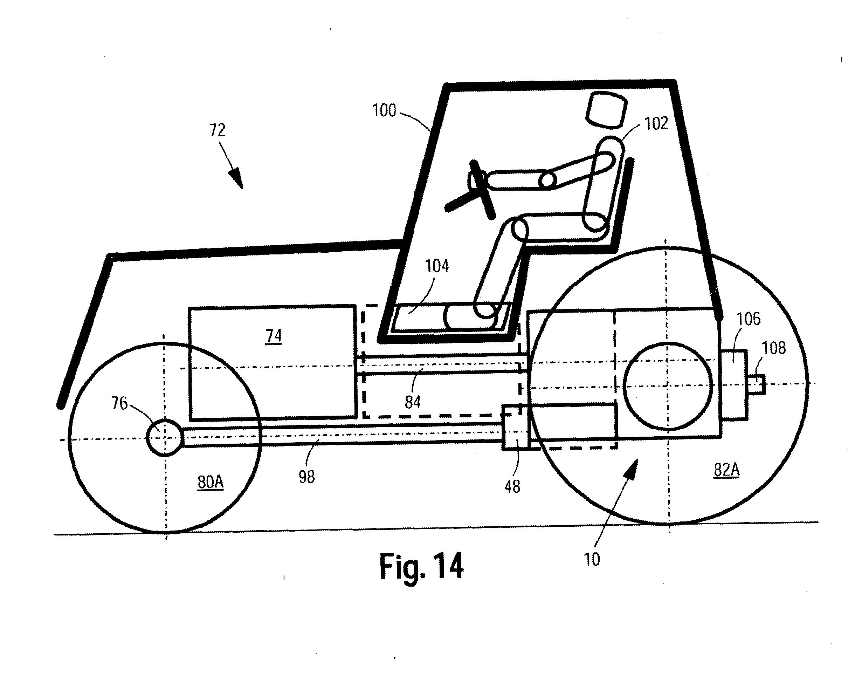

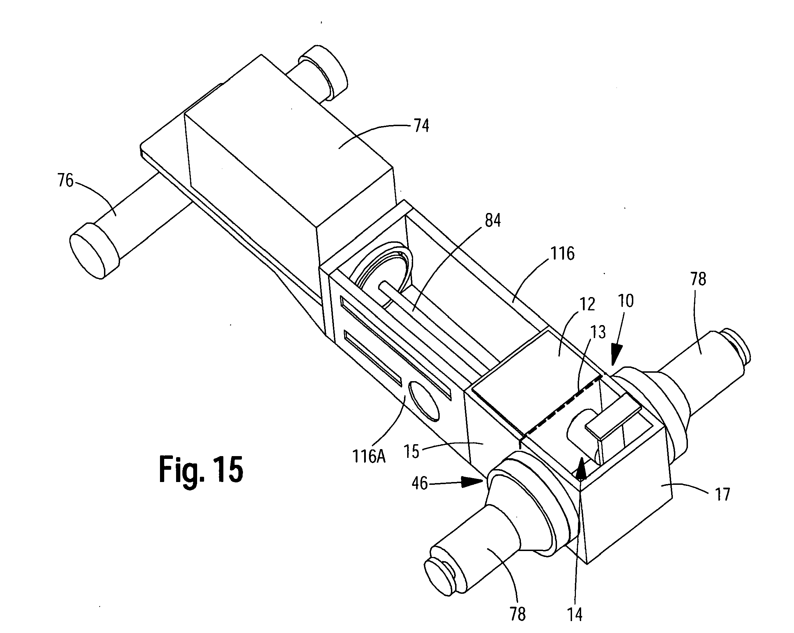

Fig. 13, 14 und 15 ist entnehmbar, dass mit dem erfindungsgemäßen Getriebe 10 in vorteilhafter Weise eine Fahrzeugkonfiguration bereitgestellt werden kann, bei welcher der Bediener über den gesamten Bereich 104 quer zur Fahrzeuglängsachse Freiraum für seine Beine bzw. Füße zu Verfügung gestellt wird. Dies ist deshalb möglich, da das erfindungsgemäße Getriebe 10 zumindest bezüglich der Fahrzeuglängsrichtung kompakter ausgebildet ist, als das bei der aus dem Stand der Technik bekannten Getriebekonfiguration gemäß Fig. 11 und 12 der Fall ist. Fig. 13, 14 und insbesondere Fig. 15 ist entnehmbar, dass zwischen dem Verbrennungsmotor 74 und dem Getriebe 10 die Antriebswelle 84 verläuft, ansonsten jedoch, abgesehen von der Antriebswelle 98 für den mechanischen Vorderradantrieb, keine weitere Komponente des Getriebes 10 vorgesehen ist. Dementsprechend kann in vorteilhafter Weise dieser Bauraum für andere Fahrzeugkomponenten genutzt werden, beispielsweise für einen in Fig. 13, 14 und 15 nicht eingezeichneten Treibstofftank. Der Verbrennungsmotor 74 ist mit dem Getriebe 10 über zwei seitlich angeordnete Rahmenteile 116A, 116B verbunden.

Fig. 13 und 15 ist entnehmbar, dass die Hauptgetriebeeinheit 12 in räumlicher Nähe der Hinterachse 78 des Fahrzeugs angeordnet ist. Mit dem von der Hauptgetriebeeinheit 12 nebst adaptiertem Optionsgetriebemodul 14 abgegebenen Drehmoment ist abtriebsseitig die Hinterachse 78 mit den daran befindlichen Hinterrädern 82A, 82B antreibbar. Falls der Allradantrieb aktiviert ist, ist mit dem vom Getriebe 10 abgegebenen Drehmoment auch die Vorderachse 76 mit den daran befindlichen Vorderrädern 80A, 80B antreibbar.

Bezüglich der Längsachse 114 der Hinterachse 78 des Traktors 72 ist das Optionsgetriebemodul 14 dem Hinterachsdifferentialgetriebe 46 räumlich nachgeordnet, steht jedoch mit diesem nicht unmittelbar im Drehmomentfluss. Die Hauptgetriebeeinheit 12 mit Optionsgetriebemodul 14 ist derart ausgebildet, dass in eingebautem Zustand der Hauptgetriebeeinheit 12 im Traktor 72 das Optionsgetriebemodul 14 räumlich benachbart zum Hinterachsdifferentialgetriebe 46 angeordnet ist.

Somit ist ein Drehmomentfluss vom Antriebsmotor bzw. vom Verbrennungsmotor 74 über die Hauptgetriebeeinheit 12 zu zumindest einer der Antriebsachsen 78, 76 des Traktors 72 herstellbar. Genauer gesagt ist ein Drehmomentfluss vom Antriebsmotor 74 über das Optionsgetriebemodul 14 und über die Hauptgetriebeeinheit 12 und das Hinterachsdifferentialgetriebe 46 zu den Antriebsachsen 76, 78 des Traktors 72 in dieser Reihenfolge herstellbar.

Der Hauptgetriebeeinheit 12 ist das Hinterachsdifferentialgetriebe 46 räumlich und bezüglich des Drehmomentflusses nachgeordnet. Mit dem Hinterachsdifferentialgetriebe 46 ist zumindest ein Teil der von der Hauptgetriebeeinheit 12 abgegebenen Leistung als Drehmoment oder Drehzahl auf die Antriebsräder 82A, 82B der Hinterachse 78 und/oder bei aktiviertem Vorderradantrieb auf die Antriebsräder 80A, 80B der Vorderachse 76 übertragbar.

Mit der Schnittstelle für den mechanischen Vorderradantrieb 48 ist eine Getriebeschnittstelle vorgesehen, über welche ein Teil der der Hauptgetriebeeinheit 12 zugeführten Leistung über die Antriebswelle 98 auf die Vorderachse 76 des Traktors 72 übertragbar ist. Die Vorderachse 76 des Traktors 72 kann ebenfalls ein nicht eingezeichnetes Achsdifferentialgetriebe aufweisen.

Die Schnittstelle für den mechanischen Vorderradantrieb 48 ist derart betreibbar und ausgebildet, dass das Verhältnis der Drehmomente, welche an die Hinterachse 78 und an die Vorderachse 76 abgebbar sind, variierbar ist. Vorzugsweise weisen die auf beide Antriebsachsen 78, 76 übertragenen Drehmomente im Wesentlichen ein Verhältnis von 60:40 auf.

Die Hauptgetriebeeinheit 12 umfasst eine weitere mechanische Schnittstelle für die Zapfwelle 108 zum Übertragen von mechanischem Drehmoment von der Hauptgetriebeeinheit 12 bzw. von dem Verbrennungsmotor 74 auf ein an den Traktor 72 adaptierbares, nicht gezeigtes Arbeitsgerät. An der mechanischen Schnittstelle für die Zapfwelle 108 ist das Zapfwellengetriebe 106 angeordnet.

Die zwischen dem Optionsgetriebemodul 14 und dem Verbrennungsmotor 74 vorgesehene Antriebswelle 84 ist in Form einer Torsionswelle ausgeführt. Die Torsionswelle ist bezüglich ihrer Dimension und bezüglich ihrer Torsionseigenschaften derart ausgebildet, dass zumindest die erste oder niedrigste Eigenfrequenz des gesamten Getriebes 10 bzw. Antriebsstrangs außerhalb des Eigenfrequenzbereichs des nutzbaren Drehzahlbandes des Traktors 72 liegt.

Ein Drehmomentfluss zwischen dem Verbrennungsmotor 74 und der Hauptgetriebeeinheit 12 ist über die Torsionswelle 84 mittels der Kupplungseinheit 16 des Optionsgetriebemoduls 14 herstellbar.

Somit ist die Hauptgetriebeeinheit 12 des Traktors 72 derart ausgestaltet, dass das Optionsgetriebemodul 14 an der Hauptgetriebeeinheit 12 adaptierbar ist. Umgekehrt ist das Optionsgetriebemodul 14 derart ausgestaltet, dass dieses an die Hauptgetriebeeinheit 12 adaptierbar ist.

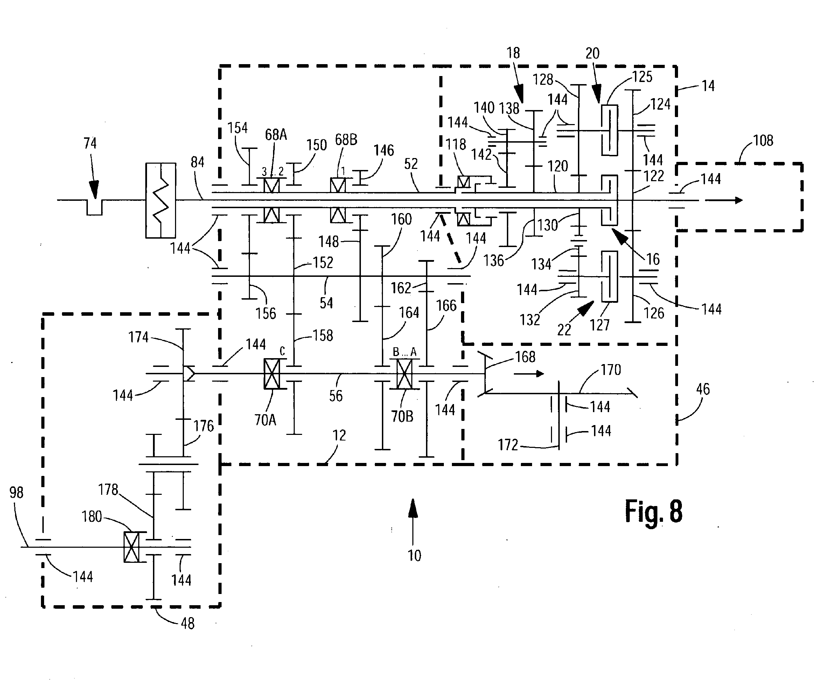

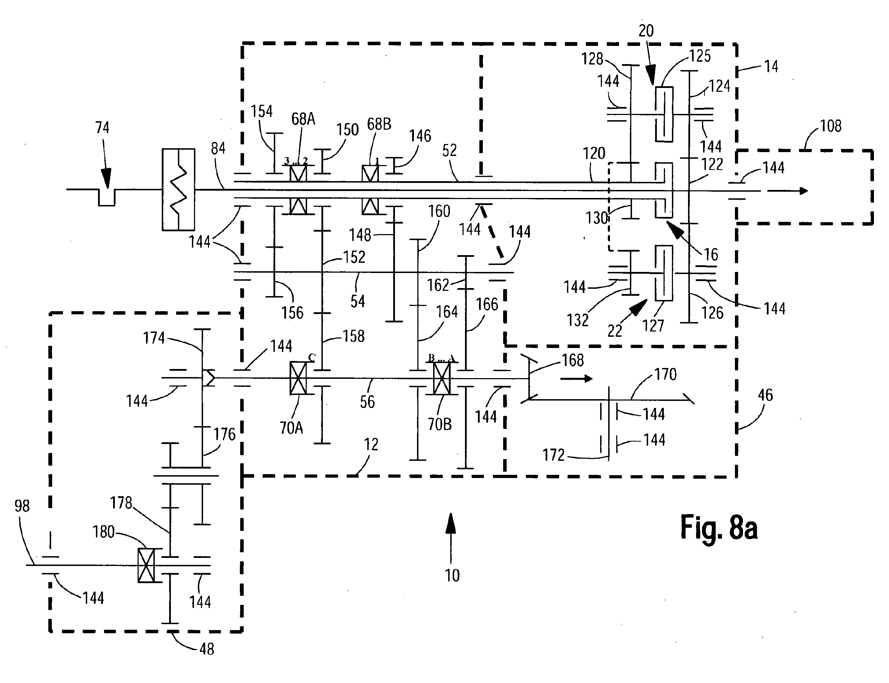

Fig. 8 zeigt in einem Stick-Diagramm ein Ausführungsbeispiel eines erfindungsgemäßen Getriebes 10, welches vergleichbar zu dem in Fig. 1 und 2 gezeigten Getriebe ausgebildet ist. Das Getriebe 10 weist eine Hauptgetriebeeinheit 12 mit 9 Vorwärts- und 3 Rückwärtsgängen auf. An das Getriebe 10 ist ein Optionsgetriebemodul 14 adaptiert, welches eine Kupplungseinheit 16, eine Kriechgang-Einheit 18, ein Zwei-Stufen-Getriebeeinheit (High-Low) 20 und eine Reversiereinheit 22 aufweist.

Das von dem Verbrennungsmotor 74 erzeugte Drehmoment wird über die Antriebswelle 84 zunächst der Kupplungseinheit 16 des Optionsgetriebemoduls 14 zugeführt. Wenn die reibschlüssige Kupplungseinheit 16 eingerückt ist, die Schaltstelle 118 der Kriechgang-Einheit 18 sich in der linken eingerückten Position befindet und somit eine drehfeste Verbindung zwischen der Ausgangswelle 120 des Optionsgetriebemoduls 14 und der Eingangswelle 52 der Hauptgetriebeeinheit 12 herstellt, wird ein Drehmoment in die Hauptgetriebeeinheit 12 eingeleitet. Sowohl die Ausgangswelle 120 des Optionsgetriebemoduls 14 als auch die Eingangswelle 52 der Hauptgetriebeeinheit 12 sind als Hohlwellen ausgebildet. Das Zahnrad 122 ist mit der Antriebswelle 84 drehfest verbunden und kämmt sowohl mit dem Eingangszahnrad 124 der Zwei-Stufen-Getriebeeinheit 20 als auch mit dem Eingangszahnrad 126 der Reversiereinheit 22. Wenn die reibschlüssige Kupplungseinheit 125 der Zwei-Stufen-Getriebeeinheit 20 eingerückt ist, ist eine drehfeste Verbindung zwischen dem Eingangszahnrad 124 und dem Ausgangszahnrad 128 hergestellt. Das Ausgangszahnrad 128 kämmt mit dem Zahnrad 130, welches drehfest mit der Ausgangswelle 120 des Optionsgetriebemoduls 14 verbunden ist. Wenn die reibschlüssige Kupplungseinheit 127 der Reversiereinheit 22 eingerückt ist, ist eine drehfeste Verbindung zwischen dem Eingangszahnrad 126 und dem Zwischenzahnrad 132 hergestellt. Das Zwischenzahnrad 132 kämmt mit einem Ausgangszahnrad 134 der Reversiereinheit 22. Das Ausgangszahnrad 134 kämmt seinerseits mit dem Zahnrad 130. Somit wird von der Antriebswelle 84 ein Drehmoment über das Optionsgetriebemodul 14 auf die Eingangswelle 52 der Hauptgetriebeeinheit 12 übertragen, wenn wahlweise die Kupplungseinheit 16, die Kupplungseinheit 125 der Zwei-Stufen-Getriebeeinheit 20 oder die Kupplungseinheit 127 der Reversiereinheit 22 eingerückt ist, wobei stets nur eine Kupplungseinheit 16, 125 oder 127 eingerückt sein kann.

Das Zahnrad 136 ist ebenfalls drehfest mit der Ausgangswelle 120 des Optionsgetriebemoduls 14 verbunden und kämmt mit dem Eingangszahnrad 138 der Kriechgang-Einheit 18. An dem Eingangszahnrad 138 ist drehfest das Zahnrad 140 verbunden, welches mit dem Ausgangszahnrad 142 der Kriechgang-Einheit 18 kämmt. Falls die Kupplungseinheit 16 oder die Kupplungseinheit 125 der Zwei-Stufen-Getriebeeinheit 20 oder die Kupplungseinheit 127 der Reversiereinheit 22 eingerückt ist und sich die Schaltstelle 118 in ihrer rechten eingerückten Position befindet, wird ebenfalls ein Drehmoment über die Ausgangswelle 120, das Zahnrad 136, das Eingangszahnrad 138, das Zahnrad 140, das Ausgangszahnrad 142 der Kriechgang-Einheit 18 und die Schaltstelle 118 auf die Eingangswelle 52 der Hauptgetriebeeinheit 12 übertragen. Dann befindet sich der Traktor 72 in dem Kriechgang-Modus.

Mit dem Bezugszeichen 144 sind die Lagerstellen in dem Getriebegehäuse 11 oder in den Gehäuseteilen 24, 40, 42 und 44 der einzelnen Wellen gekennzeichnet.

Das in die Hauptgetriebeeinheit 12 über die Eingangswelle 52 eingeleitete Drehmoment wird auf das Zahnrad 146 übertragen, falls die Schaltstelle 68B eingerückt ist. In diesem Zustand ist der erste Gang des Ganggetriebes eingelegt. Das Zahnrad 146 kämmt mit dem Zahnrad 148, welches drehfest mit der Zwischenwelle 54 verbunden ist. Falls die Schaltstelle 68B sich nicht in der eingerückten Position befindet und die Schaltstelle 68A sich in der rechten eingerückten Position befindet, ist die Eingangswelle 52 drehfest mit dem Zahnrad 150 verbunden. In diesem Zustand ist der zweite Gang das Ganggetriebes eingelegt. Das Zahnrad 150 kämmt mit dem Zahnrad 152, welches ebenfalls drehfest mit der Zwischenwelle 54 der Hauptgetriebeeinheit 12 verbunden ist. Falls die Schaltstelle 68B sich nicht in der eingerückten Position befindet und die Schaltstelle 68A sich in der linken eingerückten Position befindet, ist die Eingangswelle 52 drehfest mit dem Zahnrad 154 verbunden. In diesem Zustand ist der dritte Gang des Ganggetriebes eingelegt. Das Zahnrad 154 kämmt mit dem Zahnrad 156, welches ebenfalls drehfest mit der Zwischenwelle 54 der Hauptgetriebeeinheit 12 verbunden ist. Wenn also eine der beiden Schaltstellen 68A, 68B sich in einer eingerückten Position befindet, wird die Zwischenwelle 54 entweder über das Zahnrad 148, das Zahnrad 152 oder das Zahnrad 156 gedreht.

Mit dem Zahnrad 152 kämmt das Zahnrad 158. Die Zahnräder 160, 162 sind drehfest mit der Zwischenwelle 54 verbunden. Mit dem Zahnrad 160 kämmt das Zahnrad 164. Mit dem Zahnrad 162 kämmt das Zahnrad 166. Dementsprechend drehen sich die Zahnräder 158, 164 und 166, falls die Zwischenwelle 54 gedreht wird. Falls die Schaltstelle 70B sich in der rechten eingerückten Position befindet, ist ein Drehmomentfluss zwischen der Zwischenwelle 54 und den Zahnrädern 162, 166 zur Ausgangswelle 56 hergestellt. In diesem Zustand ist die Gruppe A des Getriebes 10 des Traktors 72 eingelegt. Falls die Schaltstelle 70B sich in der linken eingerückten Position befindet, ist ein Drehmomentfluss zwischen der Zwischenwelle 54 und den Zahnrädern 160, 164 zur Ausgangswelle 56 hergestellt. In diesem Zustand ist die Gruppe B des Getriebes 10 des Traktors 72 eingelegt. Falls die Schaltstelle 70A sich in der eingerückten Position befindet, ist ein Drehmomentfluss zwischen der Zwischenwelle 54 und den Zahnrädern 152, 158 zur Ausgangswelle 56 hergestellt. In diesem Zustand ist die Gruppe C des Getriebes 10 des Traktors 72 eingelegt.

Falls die Ausgangswelle 56 der Hauptgetriebeeinheit 12 gedreht wird, wird über das Kegelzahnrad 168 das Zahnrad 170 des Differentialgetriebes 46 gedreht, so dass die mit den Rädern 82A, 82B verbundene Abtriebswelle 172 ebenfalls gedreht wird und somit der Traktor 72 angetrieben wird.

Im vorderen Bereich des Getriebes 10 ist die Schnittstelle 48 für den mechanischen Vorderradantrieb vorgesehen. Mit der Ausgangswelle 56 der Hauptgetriebeeinheit 12 ist drehfest das Zahnrad 174 verbunden, welches mit dem rechten Zahnrad des Doppelzahnrads 176 kämmt. Das linke Zahnrad des Doppelzahnrads 176 kämmt mit dem Zahnrad 178. Falls die Schaltstelle 180 der Schnittstelle 48 für den mechanischen Vorderradantrieb sich in der eingerückten Position befindet, ist ein Drehmomentfluss von der Ausgangswelle 56 der Hauptgetriebeeinheit 12 über die Zahnräder 174, 176 und 178 zu der Antriebswelle 98 für die Räder 80A, 80B der Vorderachse 76 hergestellt.

Somit weist das in Fig. 8 gezeigte Getriebe 10 drei Gänge und drei Gruppen mit der dort vorgesehenen Hauptgetriebeeinheit 12 auf. Das Optionsgetriebemodul 14 umfasst neben der Kupplungseinheit 16 die Kriechgang-Einheit 18, die Zwei-Stufen-Getriebeeinheit 20 sowie die Reversiereinheit 22. Weiterhin ist an das Getriebe 10 die Schnittstelle 48 für den Vorderradantrieb angebaut.

Fig. 8a zeigt ein zu Fig. 8 verändertes Ausführungsbeispiel eines erfindungsgemäßen Getriebes 10, wobei die Veränderung sich auf das Optionsgetriebemodul 14 bezieht. So weist auch in Fig. 8a das Optionsgetriebemodul 14 eine Kupplungseinheit 16, eine Zwei-Stufen-Getriebeeinheit 20 und eine Reversiereinheit 22 auf. Das mit der Hohlwelle 120 drehfest verbundene Zahnrad 130 kämmt mit dem Zwischenzahnrad 132. Falls die Kupplungseinheit 125 der Zwei-Stufen-Getriebeeinheit 20 und die Kupplungseinheit 16 nicht eingerückt sind, die Kupplungseinheit 127 der Reversiereinheit 22 hingegen eingerückt ist, wird ein Drehmoment von der Antriebswelle 84 über die Reversiereinheit 22 auf die Hohlwelle 120 und somit auf die Hauptgetriebeeinheit 12 übertragen. Die Funktionsweise des in Fig. 8a gezeigten Getriebes 10 ist ansonsten im Wesentlichen vergleichbar zu derjenigen des in Fig. 8 gezeigten Getriebes.

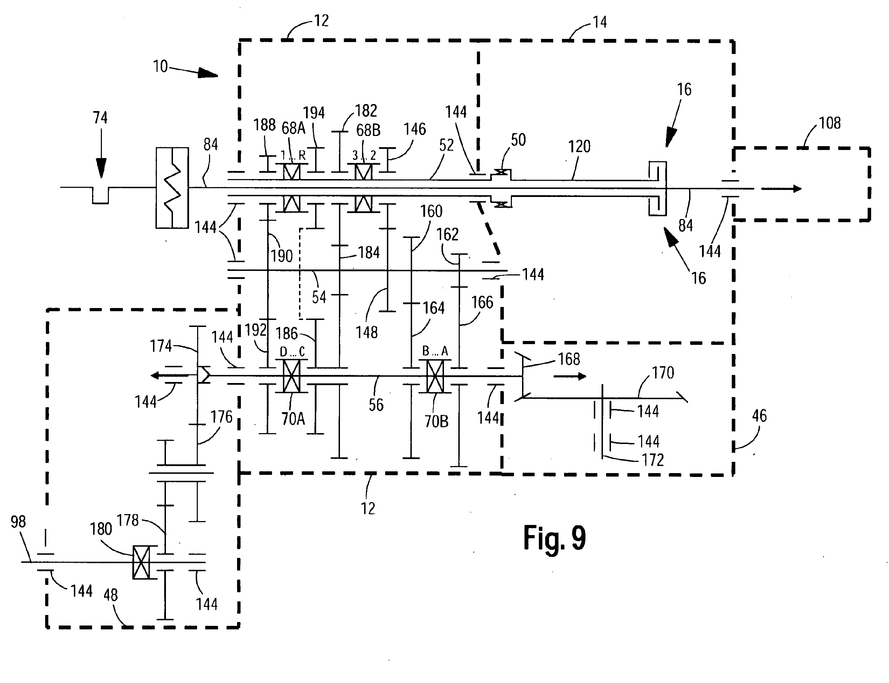

Fig. 9 zeigt ein weiteres Ausführungsbeispiel eines erfindungsgemäßen Getriebes 10, welches 12 Vorwärts- und 4 Rückwärtsgänge mit drei Gängen und vier Gruppen mit der dort vorgesehenen Hauptgetriebeeinheit 12 aufweist. Soweit Bauteile bzw. Baugruppen des Getriebes aus Fig. 8 auch in Fig. 9 vorgesehen bzw. gezeigt sind, sind diese Bauteile bzw. Baugruppen mit den selben Bezugszeichen gekennzeichnet. Das Optionsgetriebemodul 14 umfasst bei dem in Fig. 9 gezeigten Getriebe 10 lediglich die Kupplungseinheit 16 (also die geringste Ausbaustufe dieses Ausführungsbeispiels), welche einen Drehmomentfluss der Antriebswelle 84 über die Ausgangswelle 120 des Optionsgetriebemoduls 14 auf die Eingangswelle 52 der Hauptgetriebeeinheit 12 reibschlüssig bzw. kraftschlüssig herstellen kann. Weiterhin ist die Welle-Nabe-Verbindung 50 zwischen Optionsgetriebemodul 14 und Hauptgetriebeeinheit 12 gezeigt.

Die in Fig. 9 gezeigte Hauptgetriebeeinheit 12 unterscheidet sich von derjenigen aus Fig. 8 im Wesentlichen durch die drei links angeordneten Zahnradketten 182 bis 194, auf welche im Folgenden näher eingegangen wird. Die Schaltstelle 68B weist nunmehr zwei unterschiedliche Positionen auf, nämlich eine rechte eingerückte Position, welche im Wesentlichen derjenigen in Fig. 8 entspricht. Dieser Position entspricht der zweite Gang der Hauptgetriebeeinheit 12. Hinzu kommt eine linke eingerückte Position, in welcher ein Drehmomentfluss zwischen der Eingangswelle 52 der Hauptgetriebeeinheit 12 und dem Zahnrad 182 hergestellt werden kann. Der linken eingerückten Position der Schaltstelle 68B entspricht der dritte Gang der Hauptgetriebeeinheit 12. Das Zahnrad 182 kämmt mit dem Zahnrad 184, welches drehfest mit der Zwischenwelle 54 verbunden ist. Das Zahnrad 184 kämmt mit dem Doppelzahnrad 186, welches drehbar um die Ausgangswelle 56 der Hauptgetriebeeinheit 12 gelagert ist. Falls die Schaltstelle 68A sich in der linken eingerückten Position befindet, ist ein Drehmomentfluss zwischen der Eingangswelle 52 der Hauptgetriebeeinheit 12 und dem Zahnrad 188 hergestellt. Der linken eingerückten Position der Schaltstelle 68A entspricht der erste Gang der Hauptgetriebeeinheit 12. Das Zahnrad 188 kämmt mit dem Zahnrad 190, welches drehfest mit der Zwischenwelle 54 verbunden ist. Das Zahnrad 190 kämmt mit dem Zahnrad 192, welches drehbar um die Ausgangswelle 56 der Hauptgetriebeeinheit 12 gelagert ist. Falls die Schaltstelle 68A sich in der rechten eingerückten Position befindet, ist ein Drehmomentfluss zwischen der Eingangswelle 52 der Hauptgetriebeeinheit 12 und dem Zahnrad 194 hergestellt. Der rechten eingerückten Position der Schaltstelle 68A entspricht der Rückwärtsgang der Hauptgetriebeeinheit 12. Das Zahnrad 194 kämmt mit dem durch die gestrichelte Linie angedeuteten linken Teil des Doppelzahnrads 186 , welches drehbar um die Ausgangswelle 56 der Hauptgetriebeeinheit 12 gelagert ist. Somit können auf der Eingangswelle 52 drei Vorwärtsgänge und ein Rückwärtsgang geschaltet werden.

Die Schaltstellen 70A, 70B schalten nicht nur die in Fig. 8 gezeigten drei Gruppen A, B und C, sondern auch noch eine vierte Gruppe D, falls die Schaltstelle 70A sich in der linken eingerückten Position befindet. Ansonsten ist die Wirkungsweise der beiden Schaltstellen 70A, 70B sowie die Übertragung des Drehmomentflusses zu dem Hinterachsdifferentialgetriebe 46 bzw. zu der Schnittstelle 48 für den mechanischen Vorderradantrieb mit derjenigen aus Fig. 8 vergleichbar.

Anhand der in Fig. 8 und 9 gezeigten unterschiedlich konfigurierten Getriebe 10 wird deutlich, dass eine Getriebebaureihe, insbesondere für ein landwirtschaftliches oder industrielles Nutzfahrzeug in Form eines Traktors 72, dadurch gebildet und in vorteilhafter Weise auch wirtschaftlich dargestellt werden kann, indem an jeweils einer Hauptgetriebeeinheit 12 unterschiedliche Optionsgetriebemodule 14 adaptiert werden. So kann beispielsweise die Hauptgetriebeeinheit 12 aus Fig. 8 entweder mit dem Optionsgetriebemodul 14 aus Fig. 8 oder mit dem Optionsgetriebemodul 12 aus Fig. 9 kombiniert werden. Alternativ oder zusätzlich können unterschiedliche Getriebe 10 dadurch gebildet werden, dass die Hauptgetriebeeinheit 12 jeweils unterschiedlich ausgebildet ist, wobei das Getriebe 10 das gleiche oder auch ein unterschiedliches Optionsgetriebemodul 14 aufweisen kann. So kann beispielsweise die Hauptgetriebeeinheit 12 aus Fig. 8 oder die Hauptgetriebeeinheit 12 aus Fig. 9 mit dem Optionsgetriebemodul 14 aus Fig. 8 kombiniert werden.

Die Hauptgetriebeeinheit 12 ist, wie ein Vergleich zwischen Fig. 8 und 9 zeigt, dadurch unterschiedlich ausbildbar, dass die Eingangswelle 52, die Zwischenwelle 54 und/oder die Ausgangswelle 56 mit unterschiedlichen Zahnrädern bestückbar ist. Bei unterschiedlicher Bestückung der einzelnen Getriebewellen 52, 54 und 56 der Hauptgetriebeeinheit 12 sind die entsprechenden Schalteinrichtungen 68A, 68B, 70A, 70B in diesen Ausführungsbeispielen jeweils an der gleichen Stelle bzw. Position angeordnet. Auch die Lagerstellen 144 der Getriebewellen 52, 54 und 56 sind in diesen Ausführungsbeispielen bei unterschiedlich ausgebildeten Hauptgetriebeeinheiten 12 auch bei unterschiedlicher Bestückung der Getriebewellen 52, 54 und 56 der Hauptgetriebeeinheit 12 jeweils an der gleichen Stelle bzw. Position angeordnet. Somit können bei unterschiedlichen Hauptgetriebeeinheiten 12 stets das gleiche Getriebegehäuse 11 und die gleichen Schalteinrichtungen 68A, 68B, 70A, 70B verwendet werden.

## Patentansprüche

1. Getriebe und Optionsgetriebemodul zum Übertragen eines von einem Antriebsmotor erzeugten Drehmoments auf mindestens eine Antriebsachse eines Fahrzeugs, insbesondere eines landwirtschaftlichen oder industriellen Nutzfahrzeugs, mit mindestens einer für sich gesehen funktionsfähigen Hauptgetriebeeinheit (12), wobei die Hauptgetriebeeinheit (12) ein Ganggetriebe und/oder ein Gruppengetriebe aufweist, wobei an die Hauptgetriebeeinheit (12) ein in einem abgeschlossenen Optionsgetriebemodulgehäuse angeordnetes Optionsgetriebemodul (14) in Form eines für sich gesehen eigenständig oder für sich gesehen funktionsfähig ausgeführten Getriebes adaptierbar ist, wobei mit dem Optionsgetriebemodul (14) die Funktion des Getriebes (10) erweiterbar ist, und wobei die Hauptgetriebeeinheit (12) und das Optionsgetriebemodul (14) derart ausgebildet sind, dass der vorgesehene Bauraum im Wesentlichen auch dann unverändert ist, wenn das Optionsgetriebemodul (14) an der Hauptgetriebeeinheit (12) adaptiert ist, **dadurch gekennzeichnet, dass** das Optionsgetriebemodul (14) eine eigene Ölpumpe und mindestens eine eigene Betätigungseinrichtung zur Betätigung von Kupplungen des Optionsgetriebemoduls (14) mittels hydraulischer Schaltelemente aufweist.

2. Getriebe nach Anspruch 1, **dadurch gekennzeichnet, dass** das Optionsgetriebemodul (14) mindestens eine Optionseinheit aufweist, wobei die Optionseinheit in Form zumindest einer Kupplungseinheit (16) und/oder einer Reversiereinheit (22) und/oder einer Kriechgang-Einheit (18) und/oder einer Zwei-Stufen-Getriebeeinheit (20) ausgebildet ist.

3. Getriebe nach Anspruch 1 oder 2, **dadurch gekennzeichnet, dass** das Optionsgetriebemodul (14) ein Basis-Gehäuseteil (24) aufweist, an welches die mindestens eine Optionseinheit, insbesondere die Kupplungseinheit (16), adaptierbar ist.

4. Getriebe nach einem der Ansprüche 1 bis 3, **gekennzeichnet durch** ein die Hauptgetriebeeinheit (12) aufnehmendes ein-oder mehrteiliges Getriebegehäuse (11), wobei das Getriebegehäuse (11) derart ausgebildet ist, dass das Optionsgetriebemodul (14) zumindest weitgehend in dem Getriebegehäuse (11) montierbar ist, und wobei zwischen dem Optionsgetriebemodul (14) und der Hauptgetriebeeinheit (12) ein Drehmomentfluss mittelbar oder unmittelbar herstellbar ist.

5. Getriebe nach einem der Ansprüche 1 bis 4, **dadurch gekennzeichnet, dass** das Optionsgetriebemodul (14) mit einer Welle-Nabe-Verbindung (50) an die Hauptgetriebeeinheit (12) vorzugsweise reversibel adaptierbar ist, wobei die Welle-Nabe-Verbindung (50) formschlüssig oder reibschlüssig drehmomentfest ausgebildet ist.

6. Getriebe nach einem der Ansprüche 1 bis 5, **dadurch gekennzeichnet, dass** die Hauptgetriebeeinheit (12) als Drei-Wellen-Getriebe ausgeführt ist und dass die drei Getriebewellen (52, 54, 56) parallel zueinander in der Hauptgetriebeeinheit (12) angeordnet sind.

7. Getriebe nach einem der Ansprüche 1 bis 6, **dadurch gekennzeichnet, dass** bei unterschiedlicher Bestückung der einzelnen Getriebewellen (52, 54, 56) der Hauptgetriebeeinheit (12) für Getriebe (10) unterschiedlicher Eigenschaften die entsprechenden Schalteinrichtungen (68A, 68B, 70A, 70B) jeweils an der gleichen Position angeordnet sind und/oder dass mindestens eine Lagerstelle (144) einer Getriebewelle (52, 54, 56) auch bei unterschiedlicher Bestückung einer Hauptgetriebeeinheit (12) für Getriebe (10) unterschiedlicher Eigenschaften jeweils an der gleichen Position angeordnet ist.

8. Getriebe nach einem der Ansprüche 1 bis 7, **dadurch gekennzeichnet, dass** die Hauptgetriebeeinheit (12) eine zur Montage des Optionsgetriebemoduls (14) dienende Gehäuseöffnung (34) aufweist, wobei zur Montage das Optionsgetriebemodul (14) in die Gehäuseöffnung (34) einbringbar ist, und wobei die Gehäuseöffnung (34) im Zusammenwirken mit dem Optionsgetriebemodul (14) vorzugsweise derart ausgebildet ist, dass das Optionsgetriebemodul (14) nach einem in der Gehäuseöffnung (34) eingebrachten Zustand in mindestens einer Richtung relativ zur Hauptgetriebeeinheit (12) zum Herstellen einer Welle-Nabe-Verbindung (50) zwischen der Hauptgetriebeeinheit (12) und dem Optionsgetriebemodul (14) verschiebbar ist.

9. Getriebe nach einem der Ansprüche 1 bis 8, **dadurch gekennzeichnet, dass** die Hauptgetriebeeinheit (12) eine weitere mechanische Schnittstelle, insbesondere eine Zapfwelle (108) zum Übertragen von mechanischem Drehmoment von der Hauptgetriebeeinheit (12) und/oder dem Optionsgetriebemodul (14) und/oder dem Antriebsmotor (74) auf ein an das Fahrzeug (72) adaptierbares Arbeitsgerät aufweist.

10. Getriebe nach einem der Ansprüche 1 bis 9, **dadurch gekennzeichnet, dass** die Hauptgetriebeeinheit (12) oder das Optionsgetriebemodul (14) mit dem Antriebsmotor (74) über eine Torsionswelle (84) verbindbar ist, welche bezüglich ihrer Dimension vorzugsweise derart ausgebildet ist, dass zumindest eine, vorzugsweise die erste oder niedrigste Eigenfrequenz des gesamten Getriebes (10) außerhalb des Eigenfrequenzbereichs des nutzbaren Drehzahlbandes liegt.

11. Getriebe nach einem der Ansprüche 1 bis 10, **dadurch gekennzeichnet, dass** das Ganggetriebe oder das Gruppengetriebe der Hauptgetriebeeinheit (12) als Lastschaltgetriebe ausgebildet ist.

12. Hauptgetriebeeinheit für ein landwirtschaftliches oder industrielles Nutzfahrzeug, **gekennzeichnet durch** eine Ausgestaltung derart, dass ein Optionsgetriebemodul (14) nach einem der Ansprüche 1 bis 11 an der Hauptgetriebeeinheit (12) adaptierbar ist.

13. Optionsgetriebemodul für ein Getriebe für ein landwirtschaftliches oder industrielles Nutzfahrzeug, **gekennzeichnet durch** eine Ausgestaltung derart, dass das Optionsgetriebemodul (14) an eine Hauptgetriebeeinheit (12) nach einem der Ansprüche 1 bis 11 adaptierbar ist.

14. Landwirtschaftliches oder industrielles Nutzfahrzeug, insbesondere Traktor (72), **gekennzeichnet durch** ein Getriebe (10) nach einem der Ansprüche 1 bis 11.

15. Verfahren zum Herstellen eines Getriebes nach einem der Ansprüche 1 bis 1 bis 11 , **dadurch gekennzeichnet, dass** das Optionsgetriebemodul (14) an der Hauptgetriebeeinheit (12) des Getriebes (10) derart montiert wird, dass das Optionsgetriebemodul (14) in eine Gehäuseöffnung (34) des Getriebegehäuses (11) der Hauptgetriebeeinheit (12) eingebracht wird, dass das Optionsgetriebemodul (14) entlang mindestens einer Richtung derart verschoben wird, dass eine Welle-Nabe Verbindung (50) zwischen dem Optionsgetriebemodul (14) und der Hauptgetriebeeinheit (12) hergestellt wird, und dass das Optionsgetriebemodul (14) an der Hauptgetriebeeinheit (12), vorzugsweise am Gehäuse (11) der Hauptgetriebeeinheit (12) fixiert wird.

## Claims

1. Transmission and option transmission module for transmitting a torque generated by a drive engine to at least one drive axle of a vehicle, in particular an agricultural or industrial utility vehicle, having at least one main transmission unit (12) which can function independently, with the main transmission unit (12) having a gear transmission and/or an auxiliary-range transmission, with it being possible for an option transmission module (14) arranged in a closed-off option transmission module housing and designed in the form of a transmission which is self-contained or can function independently to be adapted onto the main transmission unit (12), with it being possible by means of the option transmission module (14) to expand the function of the transmission (10), and with the main transmission unit (12) and the option transmission module (14) being designed in such a way that the installation space provided is substantially unchanged even if the option transmission module (14) is adapted onto the main transmission unit (12), **characterized in that** the option transmission module (14) has a separate oil pump and at least one separate actuating device for actuating clutches of the option transmission module (14) by means of hydraulic shift elements.

2. Transmission according to Claim 1, **characterized in that** the option transmission module (14) has at least one option unit, with it being possible for the option unit to be designed in the form of at least one clutch unit (16) and/or a reversing unit (22) and/or a creep gear unit (18) and/or a twostage transmission unit (20).

3. Transmission according to Claim 1 or 2, **characterized in that** the option transmission module (14) has a base housing part (24) onto which the at least one option unit - in particular the clutch unit (16) - can be adapted.

4. Transmission according to one of Claims 1 to 3, **characterized by** a single-part or multi-part transmission housing (11) which holds the main transmission unit (12), with the the transmission housing (11) being designed in such a way that the option transmission module (14) can be at least largely mounted in the transmission housing (11), and with it being possible to produce a torque flow indirectly or directly between the option transmission module (14) and the main transmission unit (12).

5. Transmission according to one of Claims 1 to 4, **characterized in that** the option transmission module (14) can be adapted onto the main transmission unit (12) - preferably in a reversible fashion - by means of a shaft/hub connection (50), with the shaft/hub connection (50) being designed to be torque-resistant in a form-fitting or force-fitting manner.

6. Transmission according to one of Claims 1 to 5, **characterized in that** the main transmission unit is embodied as a three-shaft transmission, and **in that** the three transmission shafts (52, 54, 56) are arranged parallel to one another in the main transmission unit (12).

7. Transmission according to one of Claims 1 to 6, **characterized in that**, where the individual transmission shafts (52, 54, 56) of the main transmission unit (12) are equipped differently for transmissions (10) with different properties, the corresponding shift devices (68A, 68B, 70A, 70B) are arranged in each case at the same position, and/or **in that** at least one bearing point (144) of a transmission shaft (52, 54, 56) are arranged in each case at the same position even where a main transmission unit (12) is equipped differently for transmissions (10) with different properties.

8. Transmission according to one of Claims 1 to 7, **characterized in that** the main transmission unit (12) has a housing opening (34) which serves for mounting the option transmission module (14), with it being possible, for mounting, for the option transmission module (14) to be inserted into the housing opening (34), and with the housing opening (34) preferably being designed so as to interact with the option transmission module (14) in such a way that the option transmission module (14), in a state installed in the housing opening (34), can be displaced in at least one direction relative to the main transmission unit (12) in order to produce a shaft/hub connection (50) between the main transmission unit (12) and the option transmission module (14).

9. Transmission according to one of Claims 1 to 8, **characterized in that** the main transmission unit (12) has a further mechanical interface - in particular a power take-off shaft (108) - for transmitting mechanical torque from the main transmission unit (12) and/or from the option transmission module (14) and/or from the drive engine (74) to a working implement which can be adapted onto the vehicle (72).

10. Transmission according to one of Claims 1 to 9, **characterized in that** the main transmission unit (12) or the option transmission module (14) can be connected to the drive engine (74) by means of a torsion shaft (84) which is preferably designed, with regard to its dimensions, in such a way that at least one, preferably the first or lowest, natural frequency of the entire transmission (10) lies outside the natural frequency range of the utilizable rotational speed band.

11. Transmission according to one of Claims 1 to 10, **characterized in that** the gear transmission or the auxiliary-range transmission of the main transmission unit (12) is embodied as a powershift transmission.

12. Main transmission unit for an agricultural or industrial utility vehicle, **characterized by** a design which is such that an option transmission module (14) according to one of Claims 1 to 11 can be adapted onto the main transmission unit (12).

13. Option transmission module for a transmission for an agricultural or industrial utility vehicle, **characterized by** a design which is such that the option transmission module (14) can be adapted onto a main transmission unit (12) according to one of Claims 1 to 11.

14. Agricultural or industrial utility vehicle, in particular tractor (72), **characterized by** a transmission (10) according to one of Claims 1 to 11.

15. Method for producing a transmission according to one of Claims 1 to 11, **characterized in that** the option transmission module (14) is mounted on the main transmission unit (12) of the transmission (10) in such a way that the option transmission module (14) is inserted into a housing opening (34) of the transmission housing (11) of the main transmission unit (12), **in that** the option transmission module (14) is displaced along at least one direction in such a way that a shaft/hub connection (50) is produced between the option transmission module (14) and the main transmission unit (12), and **in that** the option transmission module (14) is fixed to the main transmission unit (12), preferably to the housing (11) of the main transmission unit (12).

## Revendications

1. Boîte de vitesses et module de boîte de vitesses optionnel pour transmettre un couple de rotation produit par un moteur d'entraînement en entrée à au moins un essieu d'entraînement en entrée d'un véhicule, notamment d'un véhicule utilitaire agricole ou industriel, avec au moins une unité de boîte de vitesses principale (12) opérationnelle en soi, l'unité de boîte de vitesses principale (12) comportant une boîte de vitesses à vitesses isolées et/ou une boîte de vitesses à vitesses groupées, un module de boîte de vitesses optionnel (14) disposé dans un carter de module de boîte de vitesses optionnel fermé pouvant être adapté à l'unité de boîte de vitesses principale (12) sous la forme d'une boîte de vitesses réalisée de façon autonome ou opérationnelle en soi et les fonctions de la boîte de vitesses (10) pouvant être élargies à l'aide du module de boîte de vitesses optionnel (14) et l'unité de boîte de vitesses principale (12) et le module de boîte de vitesses optionnel (14) étant réalisés de telle sorte que l'encombrement prévu ne change pour l'essentiel pas lorsque le module de boîte de vitesses optionnel (14) est adapté à l'unité de boîte de vitesses principale (12), **caractérisée en ce que** le module de boîte de vitesses optionnel (14) comporte une pompe à carburant propre et au moins un dispositif d'actionnement propre pour actionner les embrayages du module de boîte de vitesses optionnel (14) au moyen d'éléments de changement de vitesse hydrauliques.

2. Boîte de vitesses selon la revendication 1, **caractérisée en ce que** le module de boîte de vitesses optionnel (14) comporte au moins une unité optionnelle, l'unité optionnelle prenant la forme d'au moins une unité d'embrayage (16) et/ou d'une unité inverseuse (22) et/ou d'une unité de vitesse extralente (18) et/ou d'une unité de boîte de vitesses à deux étages (20).

3. Boîte de vitesses selon la revendication 1 ou 2, **caractérisée en ce que** le module de boîte de vitesses optionnel (14) comporte une partie de carter de base (24) à laquelle s'adapte l'au moins une unité optionnelle, notamment l'unité d'embrayage (16).

4. Boîte de vitesses selon l'une quelconque des revendications 1 à 3, **caractérisée par** un carter de boîte de vitesses (11) réalisé à partir d'une ou de plusieurs pièces et recevant l'unité de boîte de vitesses principale (12), le carter de boîte de vitesses (11) étant réalisé de telle sorte que le module de boîte de vitesses optionnel (14) peut être monté au moins largement dans le carter de boîte de vitesses (11) et qu'un flux de couple de rotation peut être réalisé de façon directe ou indirecte entre le module de boîte de vitesses optionnel (14) et l'unité de boîte de vitesses principale (12).

5. Boîte de vitesses selon l'une quelconque des revendications 1 à 4, **caractérisée en ce que** le module de boîte de vitesses optionnel (14) peut être adapté, à l'aide d'une liaison arbre-moyeu (50), à l'unité de boîte de vitesses principale (12), de préférence de façon réversible, la liaison arbre-moyeu (50) étant réalisée fixement sans couple de rotation par complémentarité de formes ou par complémentarité de frottements.

6. Boîte de vitesses selon l'une quelconque des revendications 1 à 5, **caractérisée en ce que** l'unité de boîte de vitesses principale (12) prend la forme d'une boîte de vitesses à trois arbres et que les trois arbres de boîte de vitesses (52, 54, 56) sont disposés parallèlement les uns par rapport aux autres dans l'unité de boîte de vitesses principale (12).

7. Boîte de vitesses selon l'une quelconque des revendications 1 à 6, **caractérisée en ce qu'**en cas d'attribution de propriétés différentes pour les différents arbres de boîte de vitesses (52, 54, 56) de l'unité de boîte de vitesses principale (12) prévue pour la boîte de vitesses (10), les dispositifs de changement de vitesses (68A, 68B, 70A, 70B) correspondants sont disposés respectivement à la même position et/ou qu'au moins un point d'appui (144) d'un arbre de boîte de vitesses (52, 54, 56) est disposé respectivement à la même position même en cas d'attribution différente des différentes propriétés d'une unité de boîte de vitesses principale (12) prévue pour la boîte de vitesses (10).

8. Boîte de vitesses selon l'une quelconque des revendications 1 à 7, **caractérisée en ce que** l'unité de boîte de vitesses principale (12) comporte une ouverture de carter (34) servant pour le montage du module de boîte de vitesses optionnel (14), le module de boîte de vitesses optionnel (14) pouvant être amené dans l'ouverture de carter (34) pour le montage et l'ouverture de carter (34) étant de préférence réalisée en interaction avec le module de boîte de vitesses optionnel (14) de telle sorte que le module de boîte de vitesses optionnel (14) peut être déplacé, après avoir été placé dans un état amené dans l'ouverture de carter (34), dans au moins une direction relative par rapport à l'unité de boîte de vitesses principale (12) pour mettre en place une liaison arbre-moyeu (50) entre l'unité de boîte de vitesses principale (12) et le module de boîte de vitesses optionnel (14).

9. Boîte de vitesses selon l'une quelconque des revendications 1 à 8, **caractérisée en ce que** l'unité de boîte de vitesses principale (12) comporte une interface mécanique supplémentaire, notamment une prise de force (108), pour transmettre le couple de rotation mécanique de l'unité de boîte de vitesses principale (12) et/ou du module de boîte de vitesses optionnel (14) et/ou du moteur d'entraînement en entrée (74) à un appareil de travail pouvant être adapté au véhicule (72).

10. Boîte de vitesses selon l'une quelconque des revendications 1 à 9, **caractérisée en ce que** l'unité de boîte de vitesses principale (12) ou le module de boîte de vitesses optionnel (14) peut être relié au moteur d'entraînement en entrée (74) via un arbre de torsion (84) réalisé de préférence de telle sorte, par rapport à ses dimensions, qu'au moins une fréquence propre de l'ensemble de la boîte de vitesses (10), de préférence la première ou la plus basse, se situe en dehors de la plage de fréquence de la plage de nombres de tours utile.

11. Boîte de vitesses selon l'une quelconque des revendications 1 à 10, **caractérisée en ce que** la boîte de vitesses à vitesses isolées ou la boîte de vitesses à vitesses groupées de l'unité de boîte de vitesses principale (12) prend la forme d'une boîte de vitesses commandée sous charge.

12. Unité de boîte de vitesses principale pour un véhicule utilitaire agricole industriel, **caractérisée par** une configuration telle qu'un module de boîte de vitesses optionnel (14) selon l'une quelconque des revendications 1 à 11 peut être adapté à l'unité de boîte de vitesses principale (12).

13. Module de boîte de vitesses optionnel pour une boîte de vitesses de véhicule utilitaire agricole ou industriel, **caractérisé par** une configuration telle que le module de boîte de vitesses optionnel (14) peut être adapté à une unité de boîte de vitesses principale (12) selon l'une quelconque des revendications 1 à 11.

14. Véhicule utilitaire agricole ou industriel, notamment tracteur (72), **caractérisé par** une boîte de vitesses (10) selon l'une quelconque des revendications 1 à 11.

15. Procédé de fabrication d'une boîte de vitesses selon l'une quelconque des revendications 1 à 11, **caractérisé en ce que** le module de boîte de vitesses optionnel (14) peut être monté de telle sorte à l'unité de boîte de vitesses principale (12) de la boîte de vitesses (10) que le module de boîte de vitesses optionnel (14) peut être amené dans une ouverture de carter (34) du carter de boîte de vitesses (11) de l'unité de boîte de vitesses principale (12), que le module de boîte de vitesses optionnel (14) peut être déplacé de telle sorte le long d'au moins une direction qu'une liaison arbre-moyeu (50) est établie entre le module de boîte de vitesses optionnel (14) et l'unité de boîte de vitesses principale (12) et que le module de boîte de vitesses optionnel (14) est fixé à l'unité de boîte de vitesses principale (12), de préférence au carter (11) de l'unité de boîte de vitesses principale (12).
